(19) Europäisches Patentamt / European Patent Office / Office européen des brevets

(11) **EP 4 109 392 B1**

(12) **EUROPEAN PATENT SPECIFICATION**

(45) Date of publication and mention
of the grant of the patent:
**25.02.2026 Bulletin 2026/09**

(21) Application number: **20920655.6**

(22) Date of filing: **31.08.2020**

(51) International Patent Classification (IPC):
*G06T 5/00* ^(2024.01)

(52) Cooperative Patent Classification (CPC):
**G06T 3/4015; G06N 3/0464; G06N 3/084;
G06T 5/60; G06T 5/70;** G06T 2207/10024;
G06T 2207/20012; G06T 2207/20084

(86) International application number:
**PCT/CN2020/112619**

(87) International publication number:
**WO 2021/164234 (26.08.2021 Gazette 2021/34)**

(54) **IMAGE PROCESSING METHOD AND IMAGE PROCESSING DEVICE**

BILDVERARBEITUNGSVERFAHREN UND BILDVERARBEITUNGSVORRICHTUNG

PROCÉDÉ DE TRAITEMENT D'IMAGE ET DISPOSITIF DE TRAITEMENT D'IMAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.02.2020 CN 202010107896**

(43) Date of publication of application:
**28.12.2022 Bulletin 2022/52**

(73) Proprietor: **Huawei Technologies Co., Ltd.
Longgang
Shenzhen, Guangdong 518129 (CN)**

(72) Inventors:
• **LIU, Lin**
  **Shenzhen, Guangdong 518129 (CN)**
• **JIA, Xu**
  **Shenzhen, Guangdong 518129 (CN)**
• **LIU, Jianzhuang**
  **Shenzhen, Guangdong 518129 (CN)**
• **CHEN, Shuaijun**
  **Shenzhen, Guangdong 518129 (CN)**
• **TIAN, Qi**
  **Shenzhen, Guangdong 518129 (CN)**

(74) Representative: **Gill Jennings & Every LLP
The Broadgate Tower
20 Primrose Street
London EC2A 2ES (GB)**

(56) References cited:
CN-A- 107 578 392      CN-A- 110 009 590
CN-A- 110 378 845      CN-A- 111 402 146
US-A1- 2019 355 098

• MICHAËL GHARBI ET AL: "Deep joint demosaicking and denoising", ACM TRANSACTIONS ON GRAPHICS, ACM, NY, US, vol. 35, no. 6, 11 November 2016 (2016-11-11), pages 1 - 12, XP058306363, ISSN: 0730-0301, DOI: 10.1145/2980179.2982399
• EHRET THIBAUD ET AL: "Joint Demosaicking and Denoising by Fine-Tuning of Bursts of Raw Images", 2019 IEEE/CVF INTERNATIONAL CONFERENCE ON COMPUTER VISION (ICCV), IEEE, 27 October 2019 (2019-10-27), pages 8867 - 8876, XP033724059, DOI: 10.1109/ICCV.2019.00896
• AKIYAMA HIROKI ET AL: "Pseudo four-channel image denoising for noisy CFA raw data", 2015 IEEE INTERNATIONAL CONFERENCE ON IMAGE PROCESSING (ICIP), IEEE, 27 September 2015 (2015-09-27), pages 4778 - 4782, XP032827336, DOI: 10.1109/ICIP.2015.7351714

EP 4 109 392 B1

- **WEISHONG DONG ET AL: "Joint Demosaicing and Denoising with Perceptual Optimization on a Generative Adversarial Network", ARXIV.ORG, CORNELL UNIVERSITY LIBRARY, 201 OLIN LIBRARY CORNELL UNIVERSITY ITHACA, NY 14853, 13 February 2018 (2018-02-13), XP081221622**
- **TAN HANLIN ET AL: "Joint demosaicing and denoising of noisy bayer images with ADMM", 2017 IEEE INTERNATIONAL CONFERENCE ON IMAGE PROCESSING (ICIP), IEEE, 17 September 2017 (2017-09-17), pages 2951 - 2955, XP033323116, DOI: 10.1109/ICIP.2017.8296823**
- **LIU LIN; JIA XU; LIU JIANZHUANG; TIAN QI: "Joint Demosaicing and Denoising With Self Guidance", 2020 IEEE/CVF CONFERENCE ON COMPUTER VISION AND PATTERN RECOGNITION (CVPR), IEEE, 13 June 2020 (2020-06-13), pages 2237 - 2246, XP033805260, DOI: 10.1109/CVPR42600.2020.00231**
- **MICHAËL GHARBI ; GAURAV CHAURASIA ; SYLVAIN PARIS ; FRÉDO DURAND: "Deep joint demosaicking and denoising", ACM TRANSACTIONS ON GRAPHICS, ACM, NY, US, vol. 35, no. 6, 11 November 2016 (2016-11-11), US, pages 1 - 12, XP058306363, ISSN: 0730-0301, DOI: 10.1145/2980179.2982399**

**Description**

**TECHNICAL FIELD**

This application relates to the artificial intelligence field, and more specifically, to an image processing method and apparatus in the computer vision field.

**BACKGROUND**

Computer vision is an integral part of various intelligent/autonomic systems in various application fields such as a manufacturing industry, inspection, document analysis, medical diagnosis, and military affairs. Computer vision is knowledge about how to use a camera/video camera and a computer to obtain required data and information of a photographed subject. To be vivid, eyes (the camera/video camera) and a brain (an algorithm) are installed on the computer to replace human eyes to recognize, track, and measure an object, and the like, so that the computer can perceive an environment. Perceiving may be considered as extracting information from a perceptual signal. Therefore, computer vision may also be considered as a science of studying how to make an artificial system perform "perceiving" from an image or multi-dimensional data. Generally, the computer vision is to replace a visual organ with various imaging systems to obtain input information, and then replace a brain with a computer to process and interpret the input information. A final study objective of computer vision is to enable a computer to observe and understand the world through vision in a way that human beings do, and have a capability of automatically adapting to an environment.

In the computer vision field, an imaging device usually needs to be used to obtain a digital image and recognize or analyze the digital image. For example, a standard color image generated by a terminal device is usually obtained by processing color filter array data by using a series of image signal processing pipeline algorithms. Therefore, quality of a generated image is usually closely related to an image signal processing pipeline algorithm. Demosaicing (demosaicing) and denoising (denoising) are an important part of an image signal processing pipeline algorithm. Demosaicing is a process of restoring/reconstructing a full-color image from an incompletely sampled color signal output by a color filter array photosensitive device. Because an image containing noise affects image display effect and image analysis and recognition, noise appearing in the color filter array data can be removed through image denoising.

Currently, a joint demosaicing and denoising method may be: sampling a single-channel Bayer image to obtain a four-channel image and a three-channel mask image; and concatenating the four-channel image and the three-channel mask image, to obtain a standard image obtained through joint demosaicing and denoising processing. However, because obtained color filter array data is not fully used in a joint demosaicing and denoising process, false artifacts may appear in the image obtained through joint demosaicing and denoising, and even the image is blurred. Therefore, how to improve quality of an image obtained through joint demosaicing and denoising becomes an urgent problem to be resolved.

In Michael Gharbi 'Deep Joint Demosaicking and Denoising' ACM TRANSACTIONS ON GRAPHICS, vol. 35, no.6, 11 November 2016, pages 1-12, a method for joint deomosaicking and denoising using neural networks is presented.

**SUMMARY**

This application provides an image processing method and apparatus, to avoid false artifacts to some extent, and improve image quality of a raw image obtained through joint demosaicing and denoising.

According to a first aspect, an image processing method is provided. The image processing method includes: obtaining a multi-channel image corresponding to a to-be-processed raw (raw) image, where the multi-channel image includes at least two first channel images; performing image restoration processing on one of the at least two first channel images to obtain a restored first channel image; and performing image restoration processing on the to-be-processed raw image based on the restored first channel image to obtain a raw image obtained through joint demosaicing and denoising processing.

The to-be-processed raw (raw) image may be a raw image captured by a sensor, where the to-be-processed raw image is a raw image that is not processed by an image signal processor (image signal processor, ISP).

In a possible implementation, the to-be-processed raw image may be an image in a Bayer format that has demosaicing and denoising requirements. In other words, some additional information may appear in the image, and may be noise, false artifacts, or the like.

It should be understood that image restoration processing is a technology of restoring a lost part of an image and reconstructing the lost part of the image based on image information. Image restoration processing may attempt to estimate raw image information, and restore and improve a damaged region, to improve visual quality of the image. Image restoration processing may include convolution processing, reconstruction processing, and the like.

It should be further understood that the performing image restoration processing on the first channel image to obtain the restored first channel image may be performing preliminary image restoration processing on the first channel image to obtain the preliminarily restored first channel image.

According to the image processing method provided in this embodiment of this application, image restoration may be performed in advance on the channel image corresponding to the to-be-processed raw image, to obtain the preliminarily restored channel image. The to-be-processed raw image may be guided based on the preliminarily restored channel image to undergo image restoration processing, so as to obtain a raw image obtained through joint demosaicing and denoising. The image processing method in this embodiment of this application can avoid color texture to some extent, so that image details can be retained for a processed raw image, and image quality can be improved.

With reference to the first aspect, in a possible implementation, the image processing method further includes: obtaining a density map of the to-be-processed raw image, where the density map indicates texture regions with different frequencies in the to-be-processed raw image.

The performing image restoration processing on the to-be-processed raw image based on the restored first channel image to obtain a raw image obtained through joint demosaicing and denoising processing includes: performing convolution processing on the density map and the to-be-processed raw image to obtain a first feature map; and guiding, based on the restored first channel image, the first feature map to undergo convolution processing, to obtain the raw image obtained through joint demosaicing and denoising.

It should be noted that the density map may be used to indicate texture regions with different frequencies in the to-be-processed raw image. In the density map, a response to a high-frequency texture region is high, and a response to a low-frequency texture region is low. In this way, different texture regions in the to-be-processed raw image can be distinguished from each other based on the density map.

The first feature map may be a feature map obtained by preliminarily restoring the to-be-processed raw image, that is, some noise and false artifacts may still appear in the first feature map, and no completely clean raw image obtained through joint demosaicing and denoising is obtained.

According to the image processing method provided in this embodiment of this application, the density map is input into a neural network, so that when performing convolution processing on the to-be-processed raw image, the neural network can distinguish between different texture regions, that is, a texture rich region and a texture sparse region, of the to-be-processed raw image. This can improve denoising effect and retain edge details.

According to the image processing method provided in this embodiment of this application, preliminary image restoration may be first performed on the to-be-processed raw image, that is, the convolution operation is performed on the to-be-processed raw image, to obtain the output first feature map. The first feature map is not a completely clean image, and some noise, false artifacts, or the like may appear. Further, adaptive convolution processing may be performed on the first feature map based on the preliminarily restored channel image, so that noise and mosaic in the image feature can be completely removed to obtain the final raw image obtained through joint demosaicing and denoising.

With reference to the first aspect, in a possible implementation, the guiding, based on the restored first channel image, the first feature map to undergo convolution processing, to obtain the raw image obtained through joint demosaicing and denoising includes:
performing convolution processing on the first feature map based on spatial pixel layout of the restored first channel image, to obtain the raw image obtained through joint demosaicing and denoising, where the spatial pixel layout indicates correlation between layout of different samples in the restored first channel image.

It should be noted that the preliminarily restored feature map may be guided based on the spatial pixel layout of the foregoing restored channel image, that is, the channel image pre-restored, so that further convolution processing is performed on the preliminarily restored feature map, that is, the preliminarily restored feature map can, to some extent, satisfy same or similar spatial pixel layout of the channel image pre-restored. The spatial pixel layout may be used to indicate correlation between layout of different samples.

With reference to the first aspect, in a possible implementation, the image processing method further includes: obtaining a random noise map.

The performing convolution processing on the density map and the to-be-processed raw image to obtain a first feature map includes: performing convolution processing on the density map, the random noise map, and the to-be-processed raw image to obtain the first feature map.

According to the image processing method provided in this embodiment of this application, the random noise map may be further input into the neural network, to improve denoising effect of the neural network on the to-be-processed raw image.

With reference to the first aspect, in a possible implementation, the first channel image is a green G channel image.

In a possible implementation, the channel image corresponding to the to-be-processed raw image may be an RGGB channel image, or the channel image corresponding to the to-be-processed raw image may be a GBBR channel image. In this case, the first channel image may be a G channel image.

With reference to the first aspect, in a possible implementation, the first channel image is a yellow Y channel image.

In a possible implementation, the channel image corresponding to the to-be-processed raw image may be an RYYB channel image. In this case, the first channel image may be a Y channel image.

It should be noted that the first channel image may be a channel image that has most image information in a multi-channel image and that corresponds to the to-be-processed raw image. The image information may be high-frequency information in the image, for example, detail information, texture information, and edge information in the image.

According to a second aspect, an image processing method is provided. The image processing method is applied to an electronic device having a display and a camera, and includes: detecting an operation performed by a user to instruct the camera; and displaying an output image on the display in response to the operation. The output image is obtained based on a raw (raw) image obtained through joint demosaicing and denoising, the raw image obtained through joint demosaicing and denoising is a raw image obtained by performing image restoration processing on a to-be-processed raw image captured by the camera, a restored first channel image is used in an image restoration processing procedure of the to-be-processed raw image, the to-be-processed raw image includes at least two first channel images, and the restored first channel image is a channel image obtained by performing image restoration processing on the first channel image.

It should be understood that extensions, definitions, explanations, and descriptions of related content in the first aspect are also applicable to same content in the second aspect.

With reference to the second aspect, in a possible implementation, the detecting an operation performed by a user to instruct the camera includes:

detecting an operation performed by the user to instruct to start a first processing mode, where the first processing mode indicates to perform image restoration processing on the to-be-processed raw image; or
detecting an operation performed by the user to instruct to perform photographing.

With reference to the second aspect, in a possible implementation, the image restoration processing procedure of the to-be-processed raw image further includes: obtaining a density map of the to-be-processed raw image, where the density map indicates texture regions with different frequencies in the to-be-processed raw image; performing convolution processing on the density map and the to-be-processed raw image to obtain a first feature map; and guiding, based on the restored first channel image, the first feature map to undergo convolution processing, to obtain the raw image obtained through joint demosaicing and denoising.

With reference to the second aspect, in a possible implementation, the guiding, based on the restored first channel image, the first feature map to undergo convolution processing, to obtain the raw image obtained through joint demosaicing and denoising includes: performing convolution processing on the first feature map based on spatial pixel layout of the restored first channel image, to obtain the raw image obtained through joint demosaicing and denoising. The spatial pixel layout indicates correlation between layout of different samples in the restored first channel image.

With reference to the second aspect, in a possible implementation, the image processing method further includes: obtaining a random noise map.

The performing convolution processing on the density map and the to-be-processed raw image to obtain a first feature map includes: performing convolution processing on the density map, the random noise map, and the to-be-processed raw image to obtain the first feature map.

With reference to the second aspect, in a possible implementation, the first channel image is a green G channel image.

With reference to the second aspect, in a possible implementation, the first channel image is a yellow Y channel image.

**BRIEF DESCRIPTION OF DRAWINGS**

FIG. 1 is a schematic diagram of an application scenario of an image processing method according to an embodiment of this application;
FIG. 2 is a schematic diagram of an application scenario according to an embodiment of this application;
FIG. 3 is a schematic diagram of an application scenario according to an embodiment of this application;
FIG. 4 is a schematic diagram of an application scenario according to an embodiment of this application;
FIG. 5 is a schematic diagram of a structure of a system architecture according to an embodiment of this application;
FIG. 6 is a schematic diagram of a structure of a convolutional neural network according to an embodiment of this application;
FIG. 7 is a schematic diagram of a hardware structure of a chip according to an embodiment of this application;
FIG. 8 is a schematic diagram of a system architecture according to an embodiment of this application;
FIG. 9 is a schematic diagram of a joint demosaicing and denoising system according to an embodiment of this application;

FIG. 10 is a schematic flowchart of an image processing method according to an embodiment of this application;

FIG. 11 is a schematic flowchart of a joint image demosaicing and denoising method according to an embodiment of this application;

FIG. 12 is a schematic diagram of preliminary image restoration according to an embodiment of this application;

FIG. 13 is a schematic diagram of restoring a channel image according to an embodiment of this application;

FIG. 14 is a schematic diagram of obtaining a density map of a to-be-processed raw image according to an embodiment of this application;

FIG. 15 is a schematic diagram of performing adaptive convolution by using the restored channel image according to an embodiment of this application;

FIG. 16 is a schematic flowchart of an image processing method according to an embodiment of this application;

FIG. 17(a) and FIG. 17(b) are a schematic diagram of a group of display interfaces according to an embodiment of this application;

FIG. 18(a) and FIG. 18(b) are a schematic diagram of another group of display interfaces according to an embodiment of this application;

FIG. 19 is a schematic diagram of another display interface according to an embodiment of this application;

FIG. 20 is a schematic diagram of another display interface according to an embodiment of this application;

FIG. 21 is a schematic block diagram of an image processing apparatus according to an embodiment of this application;

FIG. 22 is a schematic block diagram of an image processing apparatus according to an embodiment of this application; and

FIG. 23 is a schematic block diagram of an image processing apparatus according to an embodiment of this application.

## DESCRIPTION OF EMBODIMENTS

The following describes the technical solutions in embodiments of this application with reference to the accompanying drawings in embodiments of this application. It is clear that the described embodiments are merely a part rather than all of embodiments of this application. It should be understood that all other embodiments obtained by a person of ordinary skill in the art based on embodiments of this application without creative efforts fall within the protection scope of this application.

It should be understood that, in embodiments of this application, "first", "second", and the like are merely intended to indicate different objects, and are not intended to indicate other limitations on the indicated objects.

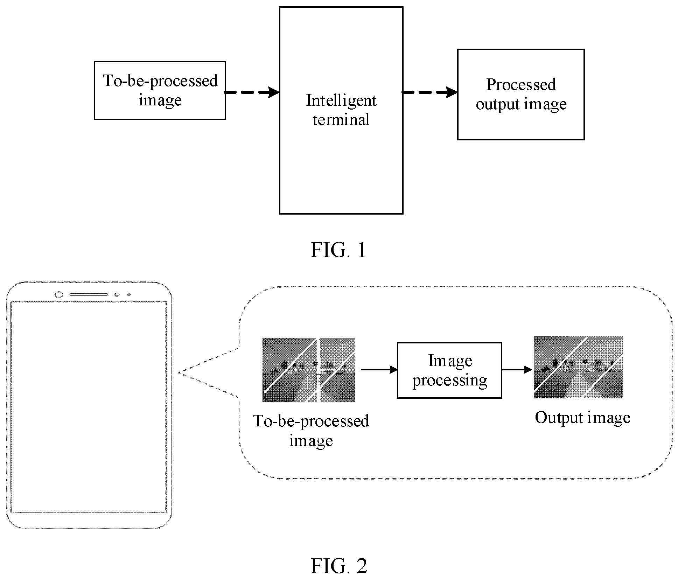

FIG. 1 is a schematic diagram of an application scenario of an image processing method according to an embodiment of this application.

As shown in FIG. 1, the image processing method in this embodiment of this application may be applied to an intelligent terminal. For example, image restoration processing may be performed on a to-be-processed raw (raw) image captured by a camera in the intelligent device, to obtain a raw image that is obtained through joint demosaicing and denoising processing and that is obtained by performing image restoration processing on the to-be-processed raw image. Subsequent image processing may be performed on the raw image obtained through joint demosaicing and denoising processing to obtain an output image. Subsequent image processing may include performing image processing such as white balance, color correction, and hue mapping on the raw image obtained through joint demosaicing and denoising. The raw image may be an image in a Bayer format.

It should be understood that image restoration processing is a technology of restoring a lost part of an image and reconstructing the lost part of the image based on image information. Image restoration processing may attempt to estimate raw image information, and restore and improve a damaged region, to improve visual quality of the image. The intelligent terminal may be mobile or fixed. For example, the intelligent terminal may be a mobile phone, a tablet personal computer (tablet personal computer, TPC), a media player, a smart television, a notebook computer (laptop computer, LC), a personal digital assistant (personal digital assistant, PDA), a personal computer (personal computer, PC), a camera, a video camera, a smartwatch, augmented reality (augmented reality, AR)/virtual reality (virtual reality, VR), a wearable device (wearable device, WD), an autonomous vehicle, or the like that has an image processing function. This is not limited in this embodiment of this application.

The following describes examples of an application scenario of this embodiment of this application.

Application scenario 1: intelligent terminal photographing field

In an embodiment, as shown in FIG. 2, the image processing method in this embodiment of this application may be applied to photographing of an intelligent terminal device (for example, a mobile phone). When an object is photographed by using a camera of the intelligent terminal, a texture rich image may be encountered. In this case, an image information processor of the intelligent terminal may cause false color artifacts, zippering noise, or the like in an obtained image. According to the image method in this embodiment of this application, that is, the joint demosaicing and denoising method, image restoration processing may be performed on an obtained raw (raw) image with poor quality, to obtain an output image (or an output video) with improved visual quality.

It should be noted that, in FIG. 2, slashes represent a color image part, to distinguish the color image part from a grayscale image part.

For example, when the intelligent terminal performs real-time photographing by using the image processing method in this embodiment of this application, image restoration processing may be performed on an obtained raw (raw) image to obtain a raw image obtained through joint demosaicing and denoising processing. Subsequent image processing may be performed on the raw image obtained through joint demosaicing and denoising, to obtain an output image. Subsequent image processing may include: performing image processing such as white balance, color correction, and hue mapping on the raw image obtained through joint demosaicing and denoising; and displaying the output image on a screen of the intelligent terminal.

For example, image restoration processing may be performed on an obtainable raw (raw) image (for example, a color filter array signal) by using the image processing method in this embodiment of this application, to obtain a raw image obtained through joint demosaicing and denoising. Subsequent image processing may be performed on the raw image obtained through joint demosaicing and denoising, to obtain an output image. Subsequent image processing may include: performing image processing such as white balance, color correction, and hue mapping on the raw image obtained through joint demosaicing and denoising; and saving the output image into a gallery of the intelligent terminal.

For example, this application provides an image processing method. The image processing method is applied to an electronic device having a display and a camera, and includes: detecting an operation performed by a user to instruct the camera; and displaying an output image on the display in response to the operation. The output image is obtained based on a raw (raw) image obtained through joint demosaicing and denoising, the raw image obtained through joint demosaicing and denoising is a raw image obtained by performing image restoration processing on a to-be-processed raw image captured by the camera, a restored first channel image is used in an image restoration processing procedure of the to-be-processed raw image, the to-be-processed raw image includes at least two first channel images, and the restored first channel image is a channel image obtained by performing image restoration processing on the first channel image.

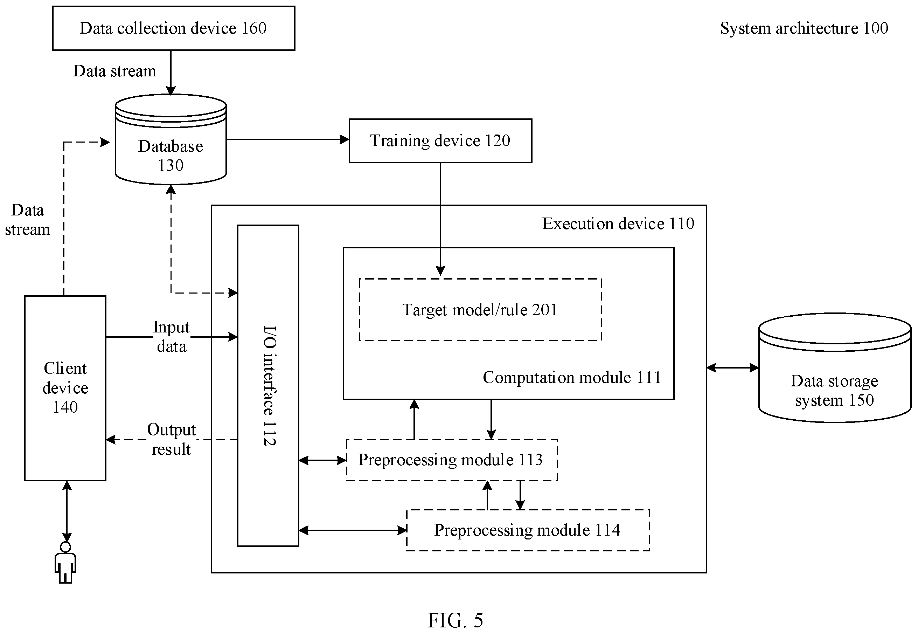

It should be noted that the image processing method provided in this embodiment of this application is also applicable to extension, limitation, explanation, and description of content related to the image processing method in related embodiments in FIG. 5 to FIG. 15. Details are not described herein again.

Application scenario 2: autonomous driving

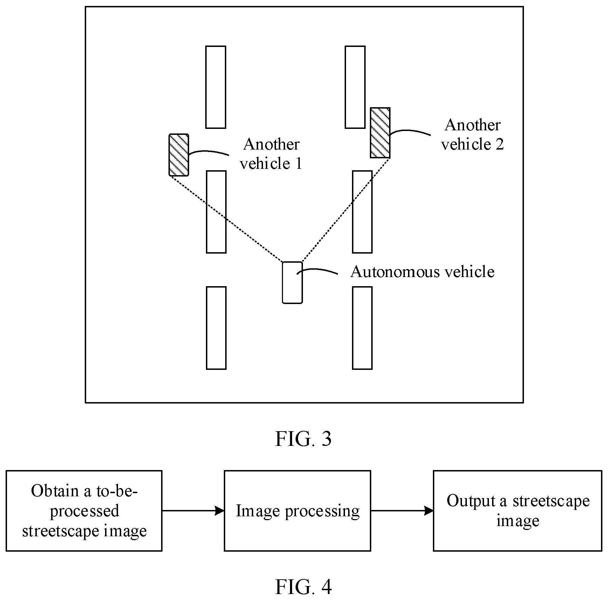

In an embodiment, as shown in FIG. 3, the image processing method in this embodiment of this application may be applied to the autonomous driving field. For example, the image processing method may be applied to a navigation system of an autonomous vehicle. According to the image processing method in this application, in a navigation process of road driving, the autonomous vehicle may perform image restoration processing on an obtained raw (raw) road image (or a raw (raw) road video) with low image quality to obtain a raw image obtained through joint demosaicing and denoising, and perform subsequent image processing on the raw image obtained through joint demosaicing and denoising, to obtain a processed road image (or road video), so as to implement safety of the autonomous vehicle. Subsequent image processing may include performing image processing such as white balance, color correction, and hue mapping on the raw image obtained through joint demosaicing and denoising.

For example, this application provides an image processing method. The image processing method includes: obtaining a channel image corresponding to a raw (raw) road image, where the channel image includes at least two first channel images; performing image restoration processing on the first channel image to obtain the restored first channel image; and performing image restoration processing on the raw road image based on the restored first channel image, to obtain a raw road image obtained through joint demosaicing and denoising.

It should be noted that the image processing method provided in this embodiment of this application is also applicable to extension, limitation, explanation, and description of content related to the image processing method in related embodiments in FIG. 5 to FIG. 15. Details are not described herein again.

Application scenario 3: safe city field

In an embodiment, as shown in FIG. 4, the image processing method in this embodiment of this application may be applied to the safe city field, for example, the security field. For example, the image processing method in this embodiment of this application may be applied to surveillance image processing in safe city. For example, usually, due to factors such as weather and a distance, a raw image (or a raw video) captured by a surveillance device in a public place is blurred or has low image quality. According to the image processing method in this application, image restoration processing, that is, joint demosaicing and denoising processing, may be performed on the captured raw image, to obtain a raw image obtained through joint demosaicing and denoising. Further, subsequent image processing is performed on the raw image obtained through joint demosaicing and denoising, to obtain a processed streetscape image. Subsequent image processing may include performing image processing such as white balance, color correction, and hue mapping on the raw image obtained through joint demosaicing and denoising. Important information such as license plate numbers and clear faces can be restored for public security personnel based on the processed streetscape images, to provide important clues for case investigation.

For example, this application provides an image processing method. The image processing method includes: obtaining a channel image corresponding to a raw (raw) streetscape image, where the channel image includes at least two first channel images; performing image restoration processing on the first channel image to obtain the restored first channel image; and performing image restoration processing on the raw streetscape image based on the restored first channel image to obtain a raw streetscape image obtained through joint demosaicing and denoising processing.

It should be noted that the image processing method provided in this embodiment of this application is also applicable to extension, limitation, explanation, and description of content related to the image processing method in related embodiments in FIG. 5 to FIG. 15. Details are not described herein again.

It should be understood that the foregoing examples are for describing the application scenarios, and does not impose any limitation on the application scenario of this application.

Because embodiments of this application relate to massive application of a neural network, for ease of understanding, the following describes terms and concepts related to the neural network that may be used in embodiments of this application.

(1) Neural network

The neural network may include a neuron. The neuron may be an operation unit that uses $x_s$ and an intercept of 1 as input. Output of the operation unit may be as follows:

$$h_{W,b}(x) = f\left(W^T x\right) = f\left(\sum_{s=1}^{n} W_s x_s + b\right),$$

where
s = 1, 2, ..., or n, n is a natural number greater than 1, $W_s$ is a weight of $x_s$, b is a bias of the neuron. f is an activation function (activation function) of the neuron, where the activation function is used for introducing a non-linear characteristic into the neural network, to convert an input signal in the neuron into an output signal. The output signal of the activation function may be used as an input for a next convolutional layer, and the activation function may be a sigmoid function. The neural network is a network constituted by connecting a plurality of single neurons together. To be specific, output of a neuron may be input for another neuron. Input for each neuron may be connected to a local receptive field of a previous layer to extract a feature of the local receptive field. The local receptive field may be a region including several neurons.

(2) Deep neural network

The deep neural network (deep neural network, DNN) is also referred to as a multi-layer neural network, and may be understood as a neural network with a plurality of hidden layers. The DNN is divided based on locations of different layers. Neural networks inside the DNN may be classified into three types: an input layer, a hidden layer, and an output layer. Generally, the first layer is the input layer, the last layer is the output layer, and the middle layer is the hidden layer. Layers are fully connected. To be specific, any neuron at an $i^{th}$ layer is necessarily connected to any neuron at an $(i+1)^{th}$ layer.

Although the DNN seems to be complex, the DNN is actually not complex in terms of work at each layer, and is simply expressed as the following linear relationship expression: $\vec{y} = \vec{\alpha}(W \cdot \vec{x} + \vec{b})$, where $\vec{x}$ is an input vector, $\vec{y}$ is an output vector, $\vec{b}$ is a bias vector, $W$ is a weight matrix (also referred to as a coefficient), and $\alpha(\ )$ is an activation function. At each layer, the output vector $\vec{y}$ is obtained by performing such a simple operation on the input vector $\vec{x}$. Due to a large quantity of DNN layers, quantities of coefficients $W$ and bias vectors $\vec{b}$ are also large. Definitions of these parameters in the DNN are as follows: The coefficient $W$ is used as an example. It is assumed that in a three-layer DNN, a linear coefficient from a fourth neuron at a second layer to a second neuron at a third layer is defined as $W_{24}^{3}$. The superscript 3 represents a layer at which the coefficient $W$ is located, and the subscript corresponds to an output third-layer index 2 and an input second-layer index 4.

In conclusion, a coefficient from a k$^{th}$ neuron at an (L-1)$^{th}$ layer to a j$^{th}$ neuron at an L$^{th}$ layer is defined as $W_{jk}^{L}$.

It should be noted that there is no parameter $W$ at the input layer. In the deep neural network, more hidden layers make the network more capable of describing a complex case in the real world. Theoretically, a model with more parameters has higher complexity and a larger "capacity". It means that the model can complete a more complex learning task. A process of training the deep neural network is a process of learning a weight matrix, and a final objective of training is to obtain weight matrices (weight matrices including vectors $W$ at many layers) of all layers of a trained deep neural network.

(3) Convolutional neural network

The convolutional neural network (convolutional neural network, CNN) is a deep neural network with a convolutional structure. The convolutional neural network includes a feature extractor including a convolutional layer and a sub-sampling layer, and the feature extractor may be considered as a filter. The convolutional layer is a neuron layer that is in the convolutional neural network and at which convolution processing is performed on an input signal. At the convolutional layer of the convolutional neural network, one neuron may be connected to only a part of neurons at a neighboring layer. A convolutional layer usually includes several feature planes, and each feature plane may include some neurons arranged in a rectangle form. Neurons of a same feature plane share a weight, and the shared weight herein is a convolution kernel. Weight sharing may be understood as that an image information extraction manner is irrelevant to a location. The convolution kernel may be initialized in a form of a matrix of a random size. In a training process of the convolutional neural network, an appropriate weight may be obtained for the convolution kernel through learning. In addition, a direct benefit brought by weight sharing is that connections between layers of the convolutional neural network are reduced and an overfitting risk is lowered.

(4) Loss function

In a process of training the deep neural network, because it is expected that an output of the deep neural network is as much as possible close to a predicted value that is actually expected, a predicted value of a current network and a target value that is actually expected may be compared, and then a weight vector of each layer of the neural network is updated based on a difference between the predicted value and the target value (certainly, there is usually an initialization process before the first update, to be specific, parameters are preconfigured for all layers of the deep neural network). For example, if the predicted value of the network is large, the weight vector is adjusted to decrease the predicted value, and adjustment is continuously performed, until the deep neural network can predict the target value that is actually expected or a value that is very close to the target value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network is a process of minimizing the loss as much as possible.

(5) Back propagation algorithm

In a training process, a neural network may correct values of parameters in an initial neural network model by using an error back propagation (back propagation, BP) algorithm, so that a reconstruction error loss of the neural network model becomes increasingly smaller. Specifically, an input signal is transferred forward until an error loss is caused at an output, and the parameter in the initial neural network model is updated based on back propagation error loss information, to make the error loss converge. The back propagation algorithm is an error-loss-centered back propagation motion intended to obtain parameters, such as a weight matrix, of an optimal neural network model.

(6) Joint demosaicing and denoising

Joint demosaicing and denoising (Joint demosaicing and denoising, JDD) is an algorithm for handling demosaicing and denoising jointly in an image signal processing pipeline of a device, for example, a terminal device (for example, a mobile phone) or a camera. Demosaicing is a process of restoring/reconstructing a full-color image from an incompletely sampled color signal output by a color filter array photosensitive device. Denoising may be removing errors and additional information from an image.

(7) Image noise

Image noise (image noise) is a random variation of brightness or color information in images (there is no random variation in a photographed object), and is usually an aspect of electronic noise. Image noise is usually produced by a sensor and circuitry of a scanner or digital camera, and can also originate in film grain and in the unavoidable shot noise of an ideal photon detector. Image noise is an undesirable by-product of image capture that obscures the desired information.

(8) Bayer (Bayer) image

When an image in a Bayer (Bayer) format is used, different colors may be set on a filter. Through analysis on color perception of human eyes, it is found that the human eyes are sensitive to green. Therefore, a quantity of pixels in a green format in the image in the bayer format may be a sum of pixels r and pixels g.

FIG. 5 shows a system architecture 100 according to an embodiment of this application.

In FIG. 5, a data collection device 160 is configured to collect training data. For the image processing method in embodiments of this application, an image processing model (also referred to as a joint demosaicing and denoising network) may be further trained based on training data. In other words, the training data captured by the data collection device 160 may be a training image.

For example, in this embodiment of this application, the training data for training the image processing model may include a raw image and a sample image corresponding to the raw image.

For example, the raw image may be a raw image that does not pass through an image signal processing pipeline. For example, for an image in a Bayer format, the sample image may be an output image obtained through image restoration processing, for example, an image obtained through joint demosaicing and denoising processing and improved in one or more aspects such as texture or detail relative to the raw (raw) image.

After collecting the training data, the data collection device 160 stores the training data into a database 130. A training device 120 obtains a target model/rule 101 (that is, the image processing model in this embodiment of this application) by performing training based on the training data maintained in the database 130. The training device 120 inputs the training data into the image processing model until a difference between a predicted image output by the training image processing model and a sample image meets a preset condition (for example, the difference between the predicted image and the sample image is less than a specific threshold, or the difference between the predicted image and the sample image remains unchanged or no longer decreases). In this way, training of the target model/rule 101 is completed.

For example, in this embodiment of this application, the image processing model used to perform the image processing method may implement end-to-end training. For example, the image processing model may implement end-to-end training based on an input image and an image (for example, ground truth) that is obtained through joint demosaicing and denoising and that corresponds to the input image.

In this embodiment provided in this application, the target model/rule 101 is obtained by using the training image processing model. In other words, the image processing model may be a joint demosaicing and denoising model. It should be noted that, in actual application, the training data maintained in the database 130 is not necessarily all captured by the data collection device 160, and may be received from another device.

It should further be noted that the training device 120 may not necessarily perform training for the target model/rule 101 completely based on the training data maintained in the database 130, or may obtain training data from a cloud or another place for model training. The foregoing descriptions should not be construed as a limitation on embodiments of this application. It should be further noted that at least a part of the training data maintained in the database 130 may also be used to perform a process of processing a to-be-processed image by an execution device 110.

The target model/rule 101 obtained through training performed by the training device 120 may be applied to different systems or devices, for example, applied to the execution device 110 shown in FIG. 5. The execution device 110 may be a terminal, for example, a mobile phone terminal, a tablet computer, a notebook computer, AR/VR, or an in-vehicle terminal; or may be a server, a cloud, or the like.

In FIG. 5, the execution device 110 is provided with an input/output (input/output, I/O) interface 112 configured to exchange data with an external device. A user may input data into the I/O interface 112 by using a client device 140. The input data in this embodiment of this application may include a to-be-processed image input by the client device.

A preprocessing module 113 and a preprocessing module 114 are configured to perform preprocessing based on the input data (for example, the to-be-processed image) received by the I/O interface 112. In this embodiment of this application, the preprocessing module 113 and the preprocessing module 114 may not exist (or only one of the preprocessing module 113 and the preprocessing module 114 exists), and a computation module 111 is directly configured to process the input data.

In a process in which the execution device 110 preprocesses the input data, or in a process in which the computation module 111 of the execution device 110 performs related processing such as computation, the execution device 110 may invoke data, code, and the like in the data storage system 150 for corresponding processing, and may further store, into the data storage system 150, data, instructions, and the like that are obtained through the corresponding processing.

Finally, the I/O interface 112 returns a processing result, for example, the raw image obtained through joint demosaicing and denoising on the to-be-processed raw image, to the client device 140, so as to provide the output image to the user.

It should be noted that the training device 120 may generate corresponding target models/rules 101 for different targets or different tasks based on different training data. The corresponding target models/rules 101 may be used to implement the foregoing targets or complete the foregoing tasks, to provide a required result to the user.

In a case shown in FIG. 5, the user may manually provide the input data on an interface provided by the I/O interface 112.

In another case, the client device 140 may automatically send the input data to the I/O interface 112. If the client device 140 is required to obtain authorization from the user to automatically send the input data, the user may set corresponding permission on the client device 140. The user may check, on the client device 140, a result output by the execution device 110. Specifically, the result may be presented in a form of displaying, sound, an action, or the like. The client device 140 may also serve as a data collector to collect, as new sample data, the input data input into the I/O interface 112 and an output result output from the I/O interface 112 that are shown in the figure, and store the new sample data into the database 130. Certainly, the client device 140 may alternatively not perform collection. Instead, the I/O interface 112 directly stores, into the database 130 as new sample data, the input data input into the I/O interface 112 and the output result output from the I/O interface 112 that are shown in the figure.

It should be noted that FIG. 5 is merely the schematic diagram of the system architecture provided in this embodiment of this application. A location relationship between devices, components, modules, and the like shown in the figure does not constitute any limitation. For example, in FIG. 5, the data storage system 150 is an external memory relative to the execution device 110. In another case, the data storage system 150 may alternatively be disposed in the execution device 110.

As shown in FIG. 5, the target model/rule 101 is obtained through training by the training device 120. The target model/rule 101 may be an image processing model in this embodiment of this application. Specifically, the image processing model provided in this embodiment of this application may be a deep neural network, a convolutional neural network, a deep convolutional neural network, or the like.

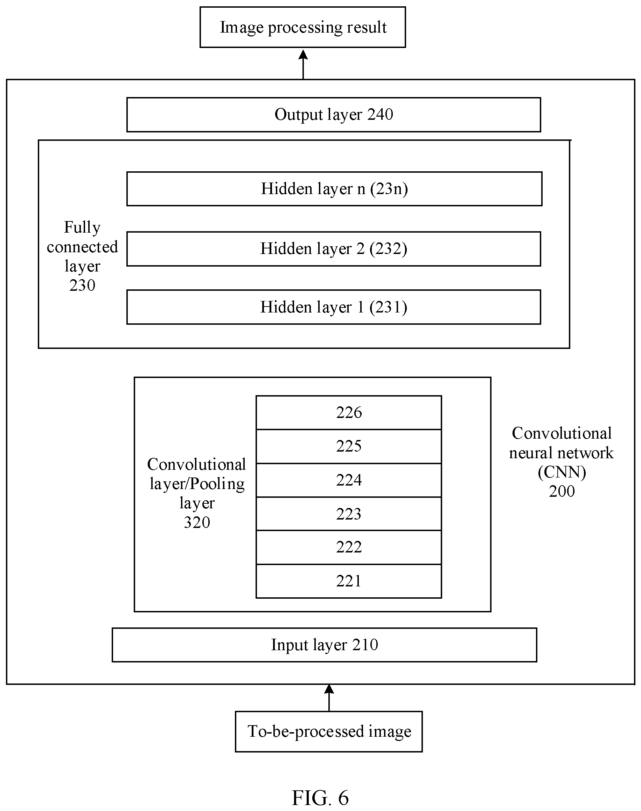

The following describes a structure of a convolutional neural network in detail with reference to FIG. 6. As described in the foregoing description of basic concepts, the convolutional neural network is a deep neural network with a convolutional structure, and is a deep learning (deep learning) architecture. The deep learning architecture is to perform multi-level learning at different abstract levels by using a machine learning algorithm. As a deep learning architecture, the convolutional neural network is a feed-forward (feed-forward) artificial neural network. Each neuron in the feed-forward artificial neural network can respond to an image input into the feed-forward artificial neural network.

A structure of the image processing model in this embodiment of this application may be shown in FIG. 6. In FIG. 6, the convolutional neural network 200 may include an input layer 210, a convolutional layer/pooling layer 220 (where the pooling layer is optional), a fully connected layer 230, and an output layer 240. The input layer 210 may obtain a to-be-processed image, and send the obtained to-be-processed image to the convolutional layer/pooling layer 220 and the fully connected layer 230 for processing, to obtain a processing result of the image. The following describes in detail a structure of internal layers in the CNN 200 in FIG. 6.

Convolutional layer/pooling layer 220:

As shown in FIG. 6, the convolutional layer/pooling layer 220 may include, for example, layers 221 to 226. For example, in an implementation, the layer 221 is a convolutional layer, the layer 222 is a pooling layer, the layer 223 is a convolutional layer, the layer 224 is a pooling layer, the layer 225 is a convolutional layer, and the layer 226 is a pooling layer. In another implementation, the layers 221 and 222 are convolutional layers, the 223 layer is a pooling layer, the layers 224 and 225 are convolutional layers, and the layer 226 is a pooling layer. In other words, output of a convolutional layer may be used as input for a subsequent pooling layer, or may be used as input for another convolutional layer, to continue to perform a convolution operation.

The following describes internal working principles of a convolutional layer by using the convolutional layer 221 as an example.

The convolutional layer 221 may include a plurality of convolution operators. The convolution operator is also referred to as a kernel. In image processing, the convolution operator functions as a filter that extracts specific information from an input image matrix. The convolution operator may essentially be a weight matrix, and the weight matrix is usually predefined. In a process of performing a convolution operation on an image, the weight matrix is usually used to process pixels at a granularity level of one pixel (or two pixels, depending on a value of a stride (stride)) in a horizontal direction on an input image, to extract a specific feature from the image. A size of the weight matrix should be related to a size of the image.

It should be noted that a depth dimension (depth dimension) of the weight matrix is the same as a depth dimension of the input image. During a convolution operation, the weight matrix extends to an entire depth of the input image. Therefore, a convolutional output of a single depth dimension is generated through convolution with a single weight matrix. However, in most cases, a single weight matrix is not used, but a plurality of weight matrices with a same size (rows x columns), namely, a plurality of same-type matrices, are applied. Outputs of the weight matrices are stacked to form a depth dimension of a convolutional image. The dimension herein may be understood as being determined based on the foregoing "plurality".

Different weight matrices may be used to extract different features from the image. For example, one weight matrix is used to extract edge information of the image, another weight matrix is used to extract a specific color of the image, and still another weight matrix is used to blur unnecessary noise in the image. The plurality of weight matrices have the same size (rows x columns), and convolutional feature maps extracted from the plurality of weight matrices with the same size have a same size. Then, the plurality of extracted convolutional feature maps with the same size are concatenated to form output of the convolution operation.

Weight values in these weight matrices need to be obtained through a lot of training during actual application. Each weight matrix formed by using the weight values obtained through training may be used to extract information from an input image, to enable the convolutional neural network 200 to perform correct prediction.

When the convolutional neural network 200 includes a plurality of convolutional layers, a large quantity of general features are usually extracted at an initial convolutional layer (for example, the layer 221). The general feature may also be referred to as a low-level feature. As a depth of the convolutional neural network 200 increases, a feature, for example, a high-level semantic feature, extracted at a subsequent convolutional layer (for example, the layer 226) becomes more complex. A feature with higher-level semantics is more appropriate for a to-be-resolved problem.

Pooling layer:

A quantity of training parameters usually needs to be reduced. Therefore, a pooling layer usually needs to be periodically introduced after a convolutional layer. For the layers 221 to 226 illustrated in 220 in FIG. 6, one convolutional layer may be followed by one pooling layer, or a plurality of convolutional layers may be followed by one or more pooling layers. During image processing, an objective of the pooling layer is to reduce a space size of the image. The pooling layer may include an average pooling operator and/or a maximum pooling operator, to perform sampling on the input image to obtain an image with a smaller size. The average pooling operator may be used to compute pixel values in the image in a specific range, to generate an average value as an average pooling result. The maximum pooling operator may be used to select a pixel with a maximum value in a specific range as a maximum pooling result.

In addition, similar to that the size of the weight matrix at the convolutional layer needs to be related to a size of the image, an operator at the pooling layer also needs to be related to the size of the image. A size of a processed image output from the pooling layer may be less than a size of an image input into the pooling layer. Each sample in the image output from the pooling layer represents an average value or a maximum value of a corresponding sub-region of the image input into the pooling layer.

Fully connected layer 230:

After processing is performed by the convolutional layer/pooling layer 220, the convolutional neural network 200 cannot output required output information. As described above, at the convolutional layer/pooling layer 220, only a feature is extracted, and parameters resulting from an input image are reduced. However, to generate final output information (required category information or other related information), the convolutional neural network 200 needs to use the fully connected layer 230 to generate output of one required category or output of a quantity of a group of required categories. Therefore, the fully connected layer 230 may include a plurality of hidden layers (231 and 232 to 23n shown in FIG. 6) and an output layer 240. Parameters included in the plurality of hidden layers may be obtained through pre-training based on related training data of a specific task type. For example, the task type may include image enhancement, image recognition, image classification, image detection, or super-resolution image reconstruction.

The output layer 240 follows the plurality of hidden layers in the fully connected layer 230, that is, the output layer 240 is the last layer of the entire convolutional neural network 200. The output layer 240 has a loss function similar to classification cross entropy, where the loss function is specifically used to compute a prediction error. Once forward propagation of the entire convolutional neural network 200 (as shown in FIG. 6, propagation from 210 to 240 is forward propagation) is completed, weight values and deviations of the layers mentioned above start to be updated in back propagation (as shown in FIG. 6, propagation from 240 to 210 is back propagation), to reduce a loss of the convolutional neural network 200 and an error between a result output by the convolutional neural network 200 by using the output layer and a desired result.

It should be noted that the convolutional neural network shown in FIG. 6 is merely a structure example of the image processing model in this embodiment of this application. In specific application, the convolutional neural network used in the image processing method in this embodiment of this application may alternatively exist in a form of another network model.

In this embodiment of this application, the image processing apparatus may include the convolutional neural network 200 shown in FIG. 6. The image processing apparatus may perform convolution processing, that is, joint demosaicing and denoising processing, on the to-be-processed raw image, to obtain the processed raw image.

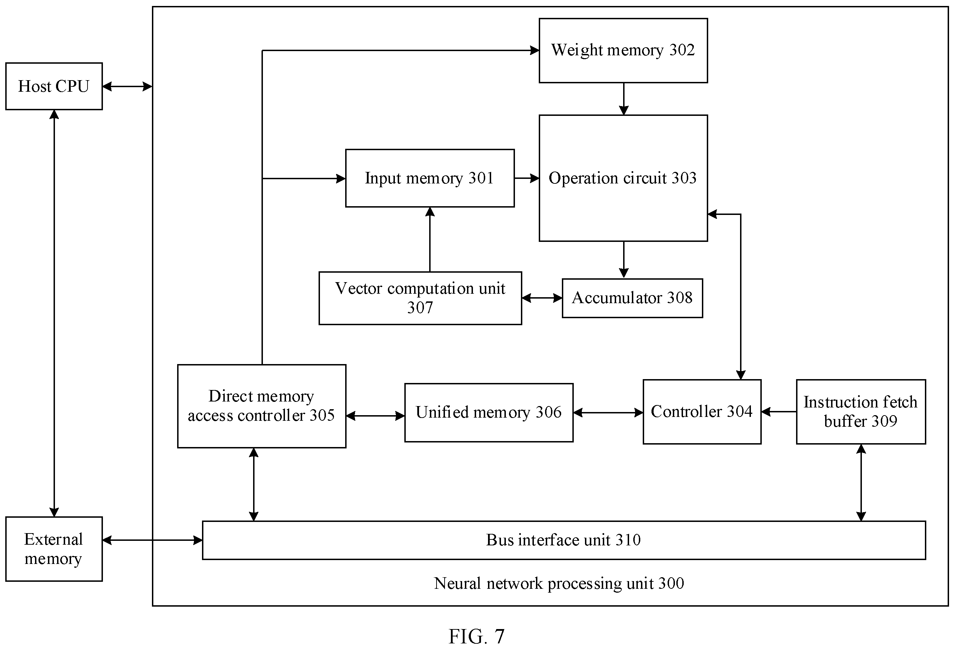

FIG. 7 shows a hardware structure of a chip according to an embodiment of this application. The chip includes a neural-network processing unit 300 (neural-network processing unit, NPU). The chip may be disposed in the execution device 110 shown in FIG. 5, to complete computation of the computation module 111. The chip may alternatively be disposed in the training device 120 shown in FIG. 5, to complete training of the training device 120 and output the target model/rule 101. All algorithms at the layers in the convolutional neural network shown in FIG. 6 may be implemented in the chip shown in FIG. 7.

The NPU 300 is mounted to a host central processing unit (central processing unit, CPU) as a coprocessor, and the host CPU allocates a task. A core part of the NPU 300 is an operation circuit 303, and a controller 304 controls the operation circuit 303 to extract data in a memory (a weight memory or an input memory) and perform an operation.

In some implementations, the operation circuit 303 internally includes a plurality of processing units (process engine, PE). In some implementations, the operation circuit 303 is a two-dimensional systolic array. Alternatively, the operation circuit 303 may be a one-dimensional systolic array or another electronic circuit that can perform mathematical operations such as multiplication and addition. In some implementations, the operation circuit 303 is a general-purpose matrix processor.

For example, it is assumed that there is an input matrix A, a weight matrix B, and an output matrix C. The operation circuit 303 obtains corresponding data of the matrix B from the weight memory 302, and buffers the data on each PE in the operation circuit 303. The operation circuit 303 obtains data of the matrix A from the input memory 301 to perform a matrix operation with that of the matrix B, and stores a partial result or a final result of an obtained matrix into an accumulator 308 (accumulator).

A vector computation unit 307 may perform further processing, such as vector multiplication, vector addition, an exponent operation, a logarithmic operation, or value comparison, on output of the operation circuit 303. For example, the vector computation unit 307 may be configured to perform network computation, such as pooling (pooling), batch normalization (batch normalization), or local response normalization (local response normalization), at a non-convolution/non-FC layer of a neural network.

In some implementations, the vector computation unit 307 can store a processed output vector into a unified memory 306. For example, the vector computation unit 307 may apply a non-linear function to the output of the operation circuit 303. For example, the non-linear function is applied to a vector of an accumulated value to generate an activation value. In some implementations, the vector computation unit 307 generates a normalized value, a combined value, or both.

In some implementations, the processed output vector can be used as an activation input for the operation circuit 303, for example, can be used at a subsequent layer of the neural network.

The unified memory 306 is configured to store input data and output data. For weight data, a storage unit access controller 305 (direct memory access controller, DMAC) stores input data in an external memory into the input memory 301 and/or the unified memory 306, stores weight data in the external memory into the weight memory 302, and stores data in the unified memory 306 into the external memory.

A bus interface unit 310 (bus interface unit, BIU) is configured to implement interaction between the host CPU, the DMAC, and an instruction fetch buffer 309 through a bus.

The instruction fetch buffer 309 (instruction fetch buffer) connected to the controller 304 is configured to store instructions used by the controller 304. The controller 304 is configured to invoke the instructions buffered in the instruction fetch buffer 309, to control a working process of the operation accelerator.

Generally, the unified memory 306, the input memory 301, the weight memory 302, and the instruction fetch buffer 309 each are an on-chip (On-Chip) memory. The external memory is a memory outside the NPU. The external memory may be a double data rate synchronous dynamic random access memory (double data rate synchronous dynamic random access memory, DDR SDRAM), a high bandwidth memory (high bandwidth memory, HBM), or another readable and writable memory.

Operations at the layers in the convolutional neural network shown in FIG. 6 may be performed by the operation circuit 303 or the vector computation unit 307.

The execution device 110 in FIG. 5 described above can perform the steps of the image processing method in this embodiment of this application. The CNN model shown in FIG. 6 and the chip shown in FIG. 7 may also be configured to perform the steps of the image processing method in this embodiment of this application.

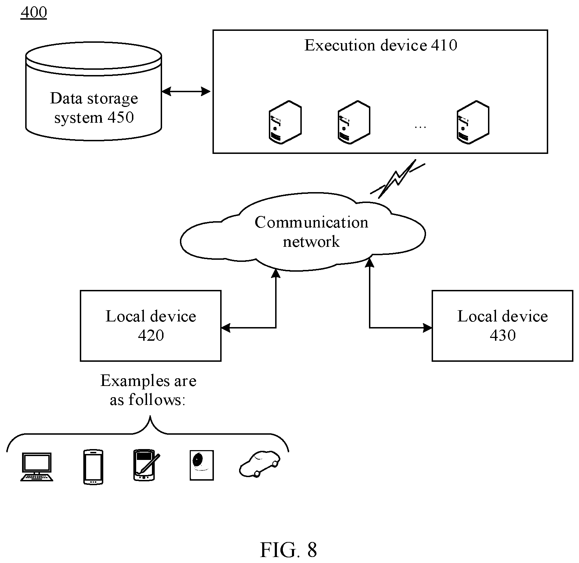

As shown in FIG. 8, an embodiment of this application provides a system architecture 400. The system architecture includes a local device 420, a local device 430, an execution device 410, and a data storage system 450. The local device 420 and the local device 430 are connected to the execution device 410 through a communication network.

For example, the execution device 410 may be implemented by one or more servers.

Optionally, the execution device 410 may be used in cooperation with another computation device, for example, a data storage device, a router, or a load balancer. The execution device 410 may be disposed on one physical site, or distributed on a plurality of physical sites. The execution device 410 may implement the image processing method in embodiments of this application by using data in the data storage system 450 or by invoking program code in the data storage system 450.

It should be noted that the execution device 410 may also be referred to as a cloud device. In this case, the execution device 410 may be deployed on the cloud.

Specifically, the execution device 410 may perform the following process: obtaining a channel image corresponding to a to-be-processed raw (raw) image, where the channel image includes at least two first channel images; performing image restoration processing on the first channel image to obtain the restored first channel image; and performing image restoration processing on the to-be-processed raw image based on the restored first channel image to obtain a raw image obtained through joint demosaicing and denoising processing.

In a possible implementation, the image processing method in embodiments of this application may be an offline method performed on the cloud. For example, the execution device 410 may perform the image processing method in embodiments of this application.

In a possible implementation, the image processing method in embodiments of this application may be performed by the local device 420 or the local device 430.

For example, users may operate respective user equipment (for example, the local device 420 and the local device 430) to interact with the execution device 410. Each local device may be any computation device, for example, a personal computer, a computer workstation, a smartphone, a tablet computer, an intelligent camera, a smart automobile, another type of cellular phone, a media consumption device, a wearable device, a set-top box, or a game console.

A local device of each user may interact with the execution device 410 through a communication network of any communication mechanism/communication standard. The communication network may be a wide area network, a local area network, a point-to-point connection, or any combination thereof.

In an implementation, the local device 420 and the local device 430 may obtain related parameters of the foregoing neural network model from the execution device 410, deploy the neural network model on the local device 420 and the local device 430, and perform image processing and the like by using the neural network model.

In another implementation, the neural network model may be directly deployed on the execution device 410. The execution device 410 obtains, from the local device 420 and the local device 430, the channel image corresponding to the to-be-processed raw image, and performs image restoration processing on the to-be-processed raw image in the neural network model, to obtain the raw image obtained through joint demosaicing and denoising.

Currently, a joint demosaicing and denoising method based on deep learning may be: obtaining a Bayer image of a raw image, and performing sampling based on the single-channel Bayer image to form a four-channel RGGB image. In addition, a three-channel RGB mask image, that is, a red mask image, a blue mask image, and a green mask image, may be obtained based on the single-channel Bayer image. A feature map output from a convolutional layer based on the RGGB image and the RGB mask image are further concatenated to obtain a clean RGB image, that is, an image obtained through joint demosaicing and denoising. However, because only the RGB mask image is used to constrain the raw image, aliasing and false color artifacts may still appear in the image after image processing is performed on a texture rich region in the raw image through RGB mask, resulting in low quality of a processed image.

In view of this, this application provides an image processing method and apparatus. A channel image corresponding to a raw (raw) image may be obtained, where the channel image may include at least two first channel images; image restoration processing is first performed on the first channel image to obtain the restored first channel image; and image restoration processing is performed on a raw image based on the restored first channel image, to obtain a final raw image obtained through joint demosaicing and denoising processing. According to the image processing method in embodiments of this application, the channel image corresponding to the raw image may be pre-restored, and the restored channel image is used to guide the raw image, so as to avoid color texture. In this way, image details can be retained in the processed image, and image quality is improved.

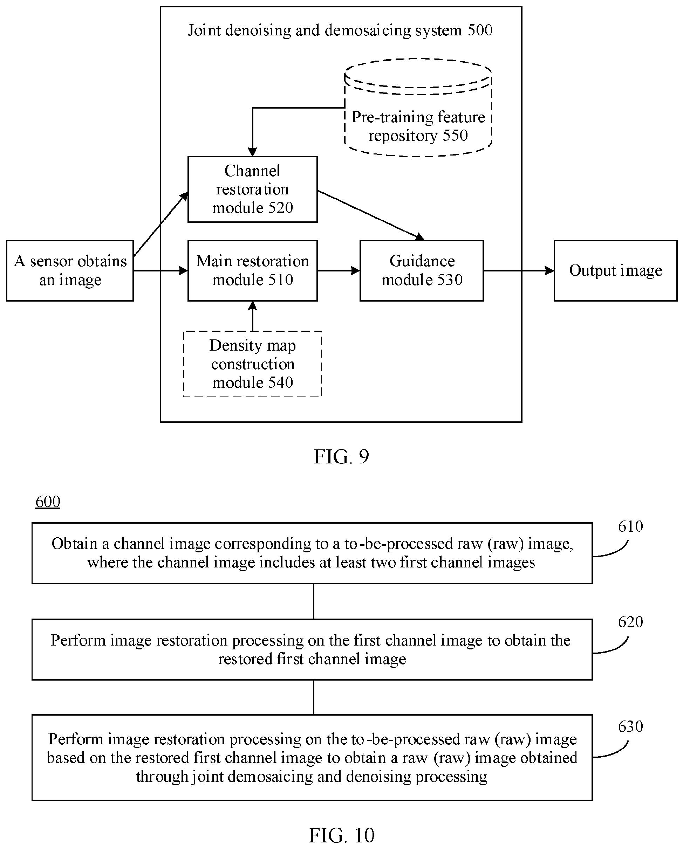

The image processing method provided in embodiments of this application may be deployed on a computation node of a related device. In this way, the joint demosaicing and denoising method in embodiments of this application can be effectively implemented by using a software algorithm. The following describes in detail a system architecture in an embodiment of this application with reference to FIG. 9.

As shown in FIG. 9, the image processing method provided in embodiments of this application may be applied to a joint demosaicing and denoising system 500. The joint demosaicing and denoising system 500 may include a main restoration module 510, a channel restoration module 520, and a guidance module 530; and may further include a density map construction module 540 and a pre-training feature repository 550. The following describes the modules in detail.

The main restoration module 510 is configured to perform a convolution operation on an obtained raw (raw) image to implement preliminary joint demosaicing and denoising processing, so as to obtain a feature map of the raw image. The raw image may be an image in a Bayer format that has a demosaicing or denoising requirement.

For example, the main restoration module 510 may reassemble color filter array signal data (for example, a raw image) obtained by a signal processor of an intelligent terminal, to obtain a four-channel image. The four-channel image and a random noise map are input into a convolutional neural network for convolution processing, to obtain a preliminarily restored feature map.

The four-channel image may be an RGGB four-channel image, a BGGR four-channel image, or an RYYB four-channel image.

Optionally, when restoring the raw image, the main restoration module 510 may further obtain a density map from the density map construction module 540, to input a density map into the convolutional neural network. The density map construction module 540 is configured to obtain the density map. The density map may indicate frequencies in different texture regions of the to-be-processed raw image. In the density map, a response to a high-frequency texture region is high, and a response to a low-frequency texture region is low. In this way, texture regions with different frequencies in the raw image can be distinguished from each other based on the density map.

It should be noted that the convolutional neural network can better identify a high-frequency region and a low-frequency region in the image based on the density map. Generally, the high-frequency region in the image is an edge and a detail region in the image, and the high-frequency region is more difficult to restore compared with the low-frequency region. If no density map is introduced into the convolutional neural network, for the convolutional neural network, all regions of the image are evenly restored. After the density map is input, the convolutional neural network can focus on restoring the high-frequency region of the to-be-processed raw image, to distinguish a texture rich region from a texture sparse region in the to-be-processed raw image, and restore different dense regions.

The channel restoration module 520 is configured to pre-restore a main channel in the four-channel image of the raw image, to obtain the restored channel image, that is, a preliminarily restored channel image.

In an example, if the four-channel image is an RGGB channel image or a BGGR channel image, the channel restoration module 520 may be configured to pre-restore two G channels.

In another example, if the four-channel image is an RYYB channel image, the channel restoration module 520 may be configured to pre-restore two Y channels.

It should be understood that the restoration module 520 selects a channel image including a large amount of information from the four channels, and pre-restores the channel image, so that more information about the to-be-processed raw image can be provided to the guidance module 530 subsequently. This helps the guidance module 530 perform adaptive convolution processing on the feature map of the to-be-processed raw image subsequently.

The guidance module 530 is configured to perform, based on the restored first channel image input by the channel restoration module 520, further convolution processing on the feature map output by the main restoration module 510, so as to obtain a final output image, that is, an image obtained through joint demosaicing and denoising processing.

Optionally, the joint demosaicing and denoising system 500 may further include the pre-training feature repository 550. The pre-training feature repository 550 may be configured to store a sample image and the restored feature map that is obtained through demosaicing and denoising and that corresponds to the sample image.

For example, training images for training a joint demosaicing and denoising model may be obtained from the pre-training feature repository 550 in a training phase.

The following describes in detail image processing methods according to embodiments of this application with reference to FIG. 10 to FIG. 20.

FIG. 10 is a schematic flowchart of an image processing method 600 according to an embodiment of this application. The method may be applied to the joint demosaicing and denoising system shown in FIG. 9. The method may be performed by an image processing apparatus. For example, the method may be performed by the execution device 410 in FIG. 8, or may be performed by the local device 420. The method 600 includes step 610 to step 630. The following separately describes the steps in detail.

Step 610: Obtain a channel image corresponding to a to-be-processed raw (raw) image, where the channel image includes at least two first channel images.

It should be noted that the to-be-processed raw (raw) image may be a raw image captured by a sensor, where the to-be-processed raw image is a raw image that is not processed by an image signal processor (image signal processor, ISP).

For example, the to-be-processed raw image may be an image in a Bayer format that has a demosaicing or denoising requirements. In other words, some additional information may appear in the image, and may be noise, false artifacts, or the like.

In an example, the channel image corresponding to the to-be-processed raw image may be a four-channel image corresponding to the to-be-processed raw image,
for example, may be an RGGB four-channel image, a BGGR four-channel image, or an RYYB four-channel image.

For example, when the obtained channel image corresponding to the to-be-processed raw image may be an RGGB four-channel image or a BGGR four-channel image, the first channel image may represent a green G channel image.

For example, when the obtained channel image corresponding to the to-be-processed raw image is an RYYB four-channel image, the first channel image may represent a yellow Y channel image.

Step 620: Perform image restoration processing on the first channel image to obtain the restored first channel image.

The performing image restoration processing on the first channel image to obtain the restored first channel image may be performing preliminary image restoration processing on the first channel image to obtain the preliminarily restored first channel image.

It should be noted that image restoration processing is a technology of restoring a lost part of an image and reconstructing the lost part of the image based on image information. Image restoration processing may attempt to estimate raw image information, and restore and improve a damaged region, to improve visual quality of the image.

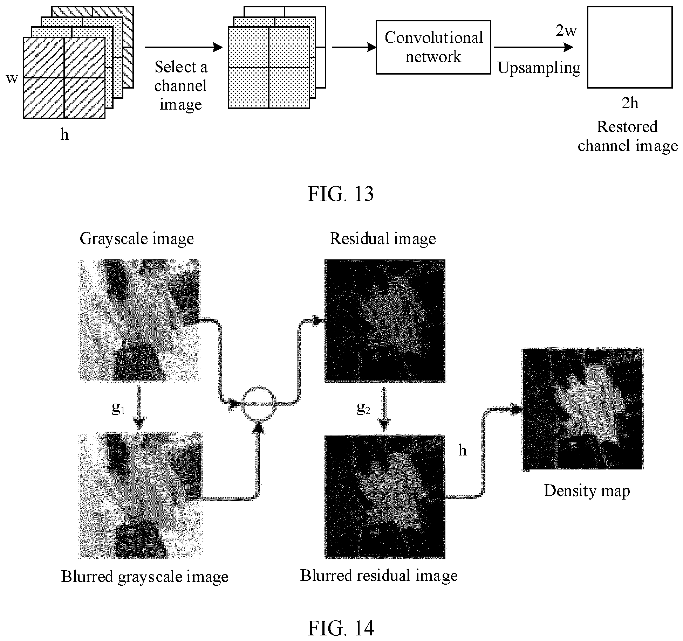

It should be understood that the performing image restoration processing on the first channel image may be performing convolution processing on the first channel image. The first channel image may be a channel image that has most image information in a multi-channel image and that corresponds to the to-be-processed raw image. The image information may be high-frequency information in the image, for example, detail information, texture information, and edge information in the image. For example, for a specific procedure of pre-restoring the first channel image, refer to FIG. 13.

In a possible implementation, to improve restoration effect on the first channel image, the first channel image and the random noise map may be concatenated, and then input into a convolutional neural network for convolution processing.

For example, the convolutional neural network may be a residual-in-residual dense block (Residual-in-Residual Dense block, RRDB) or another network model.

Step 630: Perform image restoration processing on the to-be-processed raw image based on the restored first channel image to obtain a raw image obtained through joint demosaicing and denoising processing.

It should be understood that, based on the restored first channel image, that is, the preliminarily restored first channel image, the neural network may have more image information when performing convolution processing on the to-be-processed raw image. In this way, the neural network can avoid color texture to a maximum extent when restoring the to-be-processed raw image.

Further, a density map may be further input into the neural network, so that the neural network can distinguish between different texture regions, that is, a texture rich region and a texture sparse region, of the to-be-processed raw image when performing convolution processing on the to-be-processed raw image.

Optionally, the image processing method further includes: obtaining a density map of the to-be-processed raw image, where the density map indicates texture regions with different frequencies in the to-be-processed raw image. The performing image restoration processing on the to-be-processed raw image based on the restored first channel image to obtain a raw image obtained through joint demosaicing and denoising processing includes: performing convolution processing on the density map and the to-be-processed raw image to obtain a first feature map; and guiding, based on the restored first channel image, the first feature map to undergo convolution processing, to obtain the raw image obtained through joint demosaicing and denoising.

Optionally, the guiding, based on the restored first channel image, the first feature map to undergo convolution processing, to obtain the raw image obtained through joint demosaicing and denoising includes: performing convolution processing on the first feature map based on spatial pixel layout of the restored first channel image, to obtain the raw image obtained through joint demosaicing and denoising. The spatial pixel layout indicates correlation between layout of different samples in the restored first channel image.

In an example, the guiding, based on the restored first channel image, the first feature map to undergo convolution processing, to obtain the raw image obtained through joint demosaicing and denoising may alternatively be: performing concatenation processing on the restored first channel image and a multi-channel image (for example, an RGGB channel image, a GBBR channel image, or an RYYB channel image) corresponding to the to-be-processed raw image, to guide the to-be-processed raw image, so that a raw image obtained through joint demosaicing and denoising is obtained.

It should be understood that the first feature map may be a feature map obtained by preliminarily restoring the to-be-processed raw image, that is, some noise and false artifacts may still appear in the first feature map, and no completely clean image obtained through joint demosaicing and denoising is obtained.

It should be noted that the density map may be used to indicate texture regions with different frequencies in the to-be-processed raw image. In the density map, a response to a high-frequency texture region is high, and a response to a low-frequency texture region is low. In this way, different texture regions in the raw image can be distinguished from each other based on the density map.

For example, for a specific procedure of obtaining the density map of the to-be-processed raw image, refer to the following FIG. 14. The procedure may include the following steps.

Step 1: Obtain a multi-channel image corresponding to the to-be-processed raw image, and average pixels of the multi-channel image to obtain a grayscale image Img.

For example, average processing is performed on an RGGB four-channel image to obtain a grayscale image.

Step 2: Perform Gaussian filtering on the grayscale image to obtain a blurred grayscale image Img_blur.

Step 3: Subtract the blurred grayscale image Img_blur from the grayscale image Img to obtain a residual image Img_minus, where a region with a high pixel value in the residual image may indicate a high texture frequency.

Step 4: Perform Gaussian blur on the residual image Img_minus first, and then perform normalization processing, to obtain the density map MD.

Further, when convolution processing is performed on the density map and the to-be-processed raw image, a random noise map may be further input into the neural network, that is, the density map, the to-be-processed raw image, and the random noise map may be concatenated and then input into the convolutional neural network. This can further improve image restoration effect of the neural network on the to-be-processed raw image.

Optionally, the performing convolution processing on the density map and the to-be-processed raw image to obtain a first feature map includes: obtaining a random noise map; and performing convolution processing on the density map, the random noise map, and the to-be-processed raw image to obtain the first feature map.

For example, convolution processing may be performed on the to-be-processed raw image by using an RRDB network structure or another network model.

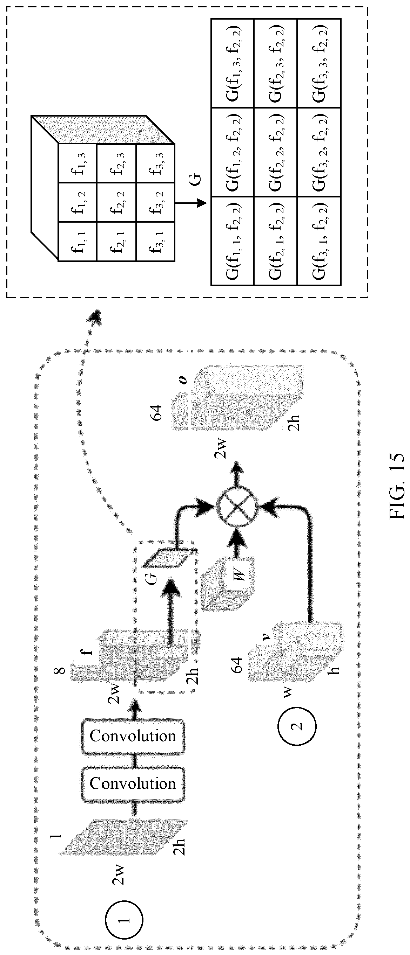

In a possible implementation, preliminary image restoration may be first performed on the to-be-processed raw image, that is, convolution processing is performed on the to-be-processed raw image, to obtain an output feature map. The feature map is not a completely clean image, and some noise, false artifacts, or the like may appear. Further, adaptive convolution processing may be performed on the output feature map based on the restored channel image, so that noise and mosaic in the feature map can be completely removed to obtain the final raw image obtained through joint demosaicing and denoising. For a specific processing procedure of the adaptive convolution processing, refer to the following FIG. 15.

It should be noted that, compared with conventional convolution processing in which windows in different spatial locations share a parameter, adaptive convolution may consider correlation between spatial layout of different samples in the first channel image. In addition, because image information in different regions of the to-be-processed raw image is different, different convolution windows may be used for the different regions of the to-be-processed raw image, that is, parameters in the convolution windows in the different regions of the image may be different. In this way, the raw image obtained through joint demosaicing and denoising can be guided in aspects such as the spatial pixel layout and image texture information.

For example, adaptive convolution processing may be performed according to the following formula:

$$o_i = \sum_{j \in \Omega(i)} G(f_i, f_j) W_{P_{i,j}} v_j + b \, ,$$

where

$o_i$ represents a feature map in a location i in a feature map corresponding to the raw image obtained through joint demosaicing and denoising; $\Omega$ represents the convolution window; W represents a convolution weight parameter; $P_{i,j}$ represents an index of the weight W; b represents a convolution bias; $f_i$ represents a vector in the location i in a feature map corresponding to the restored channel image; $f_j$ represents a vector in a location j in the feature map corresponding to the restored channel image, where the location j is correlated to the location i, that is, the location j may be any location in the convolution window corresponding to the location i; and G represents a Gaussian function that may be used to compute a Gaussian distance between two vectors.

According to the image processing method provided in this embodiment of this application, the channel image corresponding to the to-be-processed raw image may be obtained, where the channel image may include the at least two first channel images; image restoration processing is performed in advance on the first channel image to obtain the restored first channel image; and the to-be-processed raw image may be guided based on the restored first channel image to undergo image restoration processing, so as to obtain the raw image obtained through joint demosaicing and denoising processing. According to the image processing method in this embodiment of this application, the channel image corresponding to the to-be-processed raw image may be pre-restored, and the to-be-processed raw image may be guided based on the restored channel image to undergo image restoration, so as to avoid color texture. In this way, image details can be retained in the processed image, and image quality is improved.

In addition, according to the image processing method in this embodiment of this application, the density map of the to-be-processed raw image may be further input, so that the neural network can be guided to distinguish the texture rich region from the texture sparse region during convolution processing, and regions with different texture density degrees are restored.

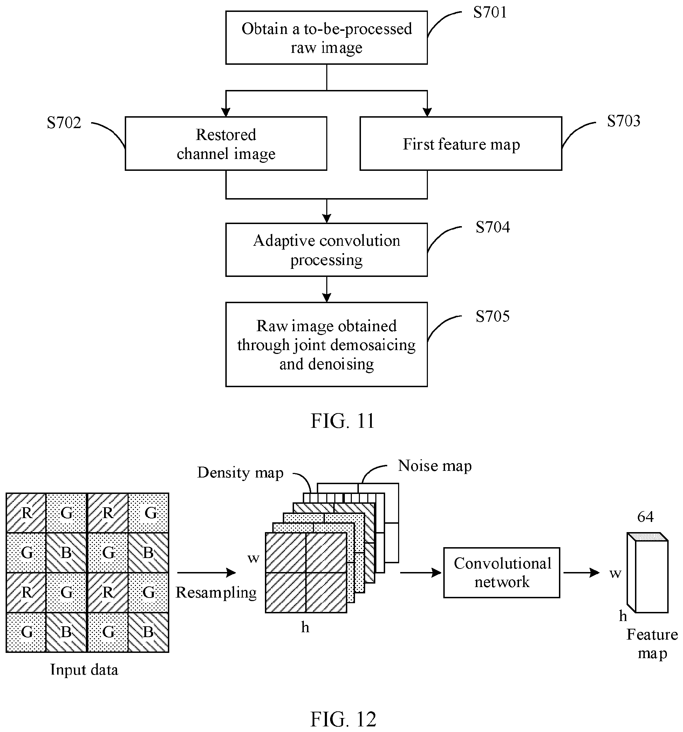

FIG. 11 is a schematic flowchart of an image processing method, that is, a joint demosaicing and denoising method for an image, according to an embodiment of this application. The joint demosaicing and denoising method 700 includes step 701 to step 705. The following separately describes the steps in detail.

Step 701: Obtain a to-be-processed raw image.

It should be understood that a camera is a module that may include a sensor and a lens, the to-be-processed raw (raw) image may be an obtained raw image captured by the sensor, and the to-be-processed raw image is a raw image that is not processed by an image signal processor (image signal processor, ISP).

For example, the to-be-processed raw image may be an image in a Bayer format that has demosaicing and denoising requirements. In other words, noise, false artifacts, or the like may appear in the raw image.

For example, the to-be-processed raw image may also be color filter array data captured by a camera sensor in an intelligent terminal.

Step 702: Restored channel image, that is, a preliminarily restored channel image.

Further, the to-be-processed raw image (for example, a Bayer image) may be reassembled to obtain a four-channel image or an image with another quantity of channels.

For example, the four-channel image is used as an example for description. The four-channel image may be an RGGB four-channel image, a BGGR four-channel image, or an RYYB four-channel image.

For example, a main channel image in the foregoing four-channel image is pre-restored, where the main channel may be a channel image that has most image information in the four-channel image.

In an example, if the four-channel image is an RGGB channel image or a BGGR channel image, the channel restoration module 520 may be configured to pre-restore two G channels.

In another example, if the four-channel image is an RYYB channel image, the channel restoration module 520 may be configured to pre-restore two Y channels.

The foregoing step 702 may be performed by the channel restoration module 520 shown in FIG. 9.

For example, FIG. 13 is a schematic diagram of restoring a channel image according to this embodiment of this application. As shown in FIG. 13, a to-be-pre-restored channel image may be selected from a multi-channel image. For example, for an RGGB channel image or a BGGR channel image, two G channel images may be selected and pre-restored, and image restoration processing, that is, convolution processing, is performed on the selected two G channel images, to obtain a restored G channel image.

Optionally, concatenation processing may be performed on the selected two G channel images and a random noise map, that is, a feature map concatenation operation is performed on the two G channel images with a same size and the random noise map. An feature map obtained through concatenation processing is input into a convolutional neural network for convolution processing, and then an upsampling operation is performed on a pre-restored channel feature map, to obtain the restored channel image. As shown in FIG. 13, a pre-restored channel image with a size of 2w*2h*1 is output. In this process, ground truth of the channel image may be used for supervision, so that preliminary image restoration is performed on the channel image.

It should be understood that the random noise map is introduced when the channel image is pre-restored, so that denoising effect on the channel image can be improved.

For example, the convolutional neural network shown in FIG. 13 may be a residual-in-residual dense network (Residual-in-Residual Dense block, RRDB) or another network model.

Step 703: The first feature map is a feature map obtained by preliminarily restoring the to-be-processed raw image.

It should be understood that the foregoing preliminarily restored image may mean that preliminary image restoration processing is performed on each channel image corresponding to the to-be-processed raw image to obtain an output first feature map. However, some noise and false artifacts may still appear in the first feature map, and no completely clean image is obtained.

It should be noted that step 702 may be performed before step 703, or step 703 may be performed before step 702. An execution sequence of step 702 and step 703 is not limited in this application.

For example, FIG. 12 is a schematic diagram of a preliminarily restored image according to this embodiment of this application. As shown in FIG. 12, input data may be a to-be-processed raw image (for example, a Bayer image) with a size of 2w*2h captured by a camera sensor, and a channel image is obtained by resampling the raw image. For example, grouping is performed for the Bayer image according to 2*2, and then pixels are sampled from fixed (top-left, top-right, bottom-left, and bottom-right) locations of each 2*2 small block, to generate a four-channel image (for example, RGGB, BGGR, and RYYB). The four-channel RGGB image is input into a convolutional neural network for convolution processing, to obtain a feature map obtained through preliminary image restoration on the raw image.

Optionally, to improve denoising effect of the convolutional neural network on the to-be-processed raw image, the random noise map may be further input into the convolutional neural network in the foregoing preliminary image restoration process.

Further, a density map may be further input into the convolutional neural network, so that the convolutional neural network can distinguish between different texture regions, that is, a texture rich region and a texture sparse region, of the to-be-processed raw image during preliminary image restoration. The density map may be used to indicate texture regions with different frequencies in the to-be-processed raw image. In the density map, a response to a high-frequency texture region is high, and a response to a low-frequency texture region is low. In this way, different texture regions in the raw image can be distinguished from each other based on the density map.

It should be noted that the convolutional neural network can better identify a high-frequency region and a low-frequency region in the image based on the density map. Generally, the high-frequency region in the image is an edge and a detail region in the image, and the high-frequency region is more difficult to restore compared with the low-frequency region. If no density map is introduced into the convolutional neural network, for the convolutional neural network, all regions of the image are evenly restored. After the density map is input, the convolutional neural network can focus on restoring the high-frequency region of the to-be-processed raw image, to distinguish a texture rich region from a texture sparse region in the to-be-processed raw image, and restore different dense regions.

For example, FIG. 14 is a schematic diagram of obtaining a density map according to this embodiment of this application. A process of obtaining the density map may include the following steps.

Step 1: Obtain a multi-channel image corresponding to the to-be-processed raw image, and average pixels of the multi-channel image to obtain a grayscale image Img.

For example, average processing is performed on an RGGB four-channel image to obtain a grayscale image.

Step 2: Perform Gaussian filtering on the grayscale image to obtain a blurred grayscale image Img_blur.

Step 3: Subtract the blurred grayscale image Img_blur from the grayscale image Img to obtain a residual image Img_minus, where a region with a high pixel value in the residual image may indicate a high texture frequency.

Step 4: Perform Gaussian blur on the residual image Img_minus first, and then perform normalization processing, to obtain the density map MD.

Step 704: Perform adaptive convolution processing.

The restored channel image, that is, the pre-restored channel image, obtained in step 702 is used as a guidance image, and the feature map obtained in step 703 is used as a guided image for adaptive convolution processing.

It should be understood that, compared with conventional convolution processing in which windows in different spatial locations share a parameter, adaptive convolution may consider correlation between spatial layout of different samples in the first channel image. In addition, because image information in different regions of the to-be-processed raw image is different, different convolution windows may be used for the different regions of the to-be-processed raw image, that is, parameters in the convolution windows in the different regions of the image may be different. In this way, the raw image obtained through joint demosaicing and denoising can be guided in aspects such as the spatial pixel layout and image texture information.

It should be further understood that the preliminarily restored feature map may be guided based on the spatial pixel layout of the foregoing channel image pre-restored, so that further convolution processing is performed on the preliminarily restored feature map, that is, the preliminarily restored feature map can, to some extent, satisfy same or similar spatial pixel layout of the channel image pre-restored. The spatial pixel layout may be used to indicate correlation between layout of different samples.

For example, adaptive convolution processing may be performed according to the following formula:

$$o_i = \sum_{j \in \Omega(i)} G(f_i, f_j) W_{P_{i,j}} v_j + b \; ,$$

where

$o_i$ represents a feature map in a location i in a feature map corresponding to the raw image obtained through joint demosaicing and denoising; $\Omega$ represents the convolution window; W represents a convolution weight parameter; $P_{i,j}$ represents an index of the weight W; b represents a convolution bias; $f_i$ represents a vector in the location i in a feature map corresponding to the restored channel image; $f_j$ represents a vector in a location j in the feature map corresponding to the restored channel image, where the location j is correlated to the location i, that is, the location j may be any location in the convolution window corresponding to the location i; and G represents a Gaussian function that may be used to compute a Gaussian distance between two vectors.

For example, FIG. 15 is a schematic diagram of adaptive convolution processing according to this embodiment of this application. As shown in FIG. 15, first, dimension-increased processing may be performed on the first channel image (for example, a pre-restored G channel image or a pre-restored Y channel image) through two-layer convolution, to obtain an 8-channel feature map. Then, further convolution processing is performed on a preliminarily restored feature map according to the foregoing adaptive convolution processing formula, to obtain a final raw image obtained through joint demosaicing and denoising.

For example, in FIG. 15, a size of a convolution window may be 3*3, and $f_i$ may represent a vector in any location in the feature map. For example, when $f_i$ represents a vector in a location $f_{2,2}$ of the convolution window, $f_j$ may represent any vector in a location of the convolution window other than the location $f_{2,2}$. In other words, for one $f_i$, there may be a plurality

of related (f$_j$)s at the same time.

Step 705: Output the raw image obtained through joint demosaicing and denoising.

Optionally, subsequent image processing may be further performed on the raw image obtained through joint demosaicing and denoising, to obtain a standard full-color image, that is, an SRGB image. Subsequent image processing may be performing image processing such as white balance, color correction, and hue mapping on the raw image obtained through joint demosaicing and denoising.

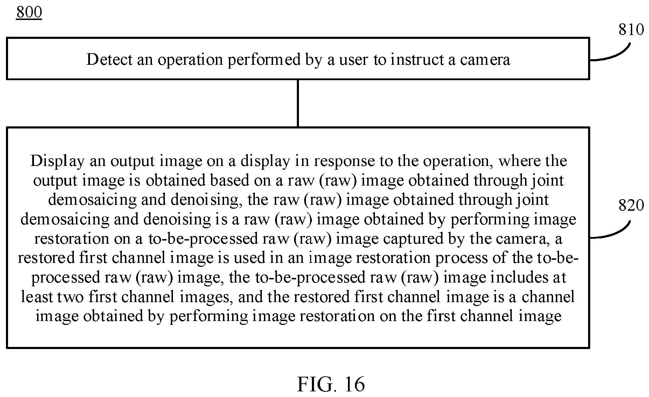

The following describes in detail an image processing method according to an embodiment of this application with reference to FIG. 16. The image processing method may be applied to an electronic device having a display and a camera. The electronic device may be specifically a mobile terminal (for example, a smartphone), a computer, a personal digital assistant, a wearable device, a vehicle-mounted device, an internet of things device, or another device that can display an image.

The image processing method 800 shown in FIG. 16 includes step 810 and step 820. The following separately describes the steps in detail.

Step 810: Detect an operation performed by a user to instruct the camera.

For example, an operation performed by the user to instruct to start a first processing mode may be detected. The first processing mode may be a professional photographing mode. Alternatively, the first processing mode may be an AI ISP processing mode, that is, performing, by using the image processing method shown in FIG. 10, image restoration processing on a to-be-processed raw image captured by a camera. Alternatively, the first processing mode may be a photographing mode of joint demosaicing and denoising, so that an image with high image quality is obtained.

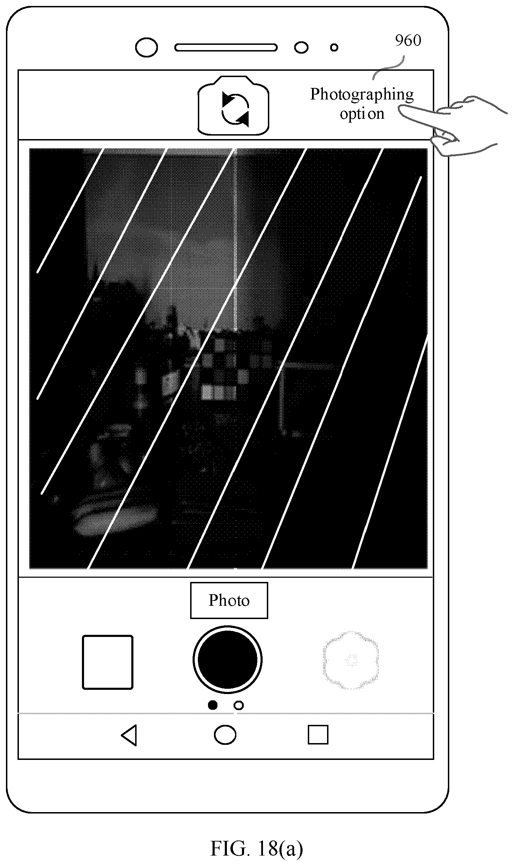

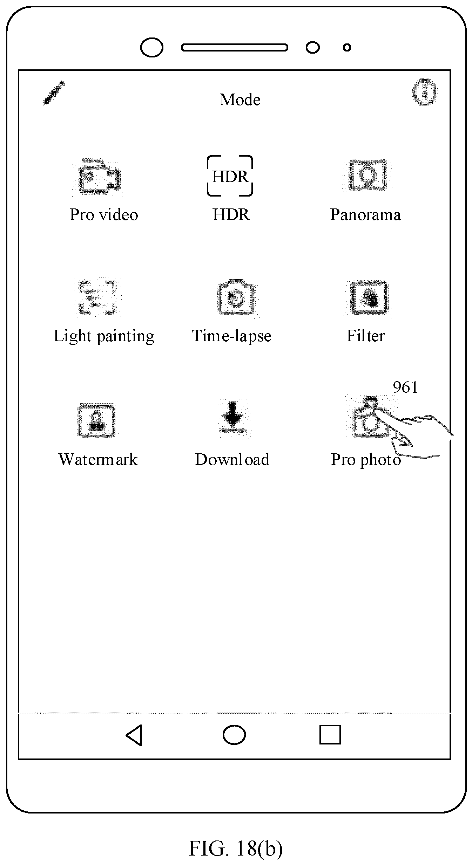

In an example, as shown in FIG. 18(a), a photographing interface includes a photographing option 960. After the electronic device detects that a user taps the photographing option 960, the electronic device displays a photographing mode interface, as shown in FIG. 18(b). After the electronic device detects that the user taps a professional photographing mode 961 on the photographing mode interface, a mobile phone enters the professional photographing mode.

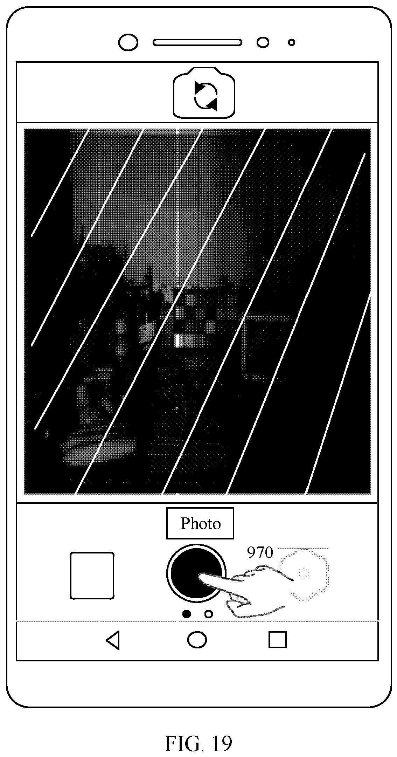

For example, an operation performed by the user to instruct to perform photographing may be detected. The operation may be used as an operation to instruct to perform image restoration on the obtained to-be-processed raw image. Refer to FIG. 19. An operation 970 performed by the user to instruct to perform photographing may be detected.

It should be understood that an operation performed by the user to instruct to perform a photographing action may include: pressing a photographing button in a camera of the electronic device; instructing, by user equipment by using a voice, the electronic device to perform a photographing action; instructing, by the user by using a shortcut key, the electronic device to perform a photographing action; or performing another action performed by the user to instruct the electronic device to perform a photographing action. The foregoing descriptions are examples, and do not constitute any limitation on this application.

In a possible implementation, the detecting an operation performed by a user to instruct the camera may be an operation performed by the user to directly perform photographing by using a shortcut key.

In a possible implementation, before step 810, the image processing method further includes: detecting a first operation performed by the user to start the camera; and displaying the photographing interface on the display in response to the first operation.

In an example, the photographing action of the user may include the first operation of starting the camera by the user. In response to the first operation, the photographing interface is displayed on the display.

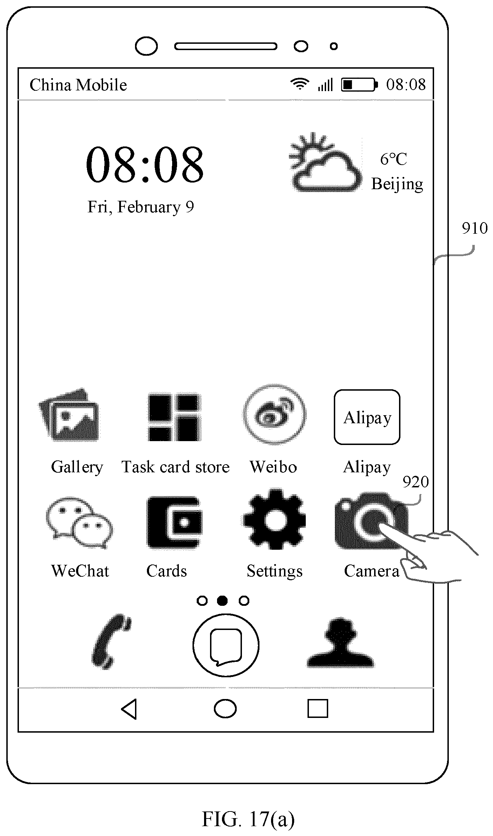

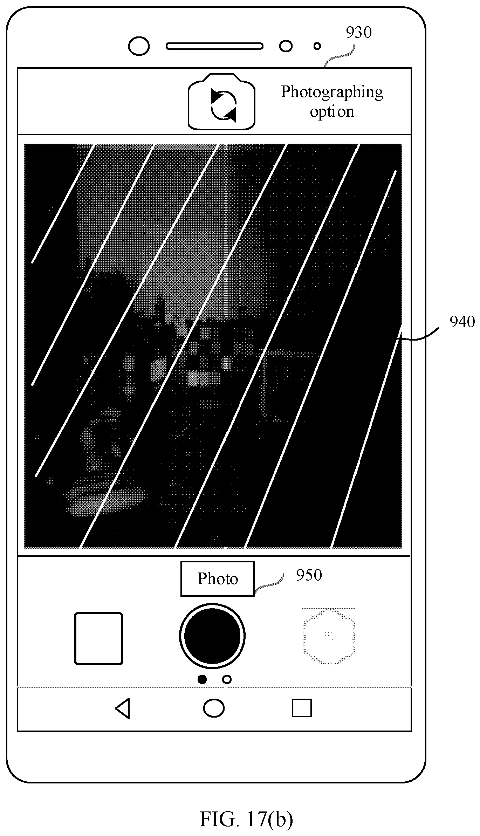

FIG. 17(a) shows a graphical user interface (graphical user interface, GUI) of the mobile phone. The GUI is a home screen 910 of the mobile phone. When detecting an operation of tapping, by the user, an icon 920 of a camera application (application, APP) on the home screen 910, the electronic device may start the camera application, and display another GUI shown in FIG. 17(b). The GUI may be referred to as a photographing interface 930.

For example, the photographing interface 930 may include a viewfinder frame 940. In a preview state, a preview image may be displayed in the viewfinder frame 940 in real time.

For example, refer to FIG. 17(b). After the electronic device starts the camera, a preview image may be displayed in the viewfinder frame 940. The preview image is a color image. The photographing interface may further include a control 950 used to instruct to start a photographing mode and another photographing control. It should be noted that in this embodiment of this application, slashes represent a color image part, to distinguish the color image part from a grayscale image part.

In an example, the photographing action of the user may include the first operation of starting the camera by the user. In response to the first operation, the photographing interface is displayed on the display.

For example, after detecting the first operation that the user taps the icon of the camera application (application, APP) on the home screen, the electronic device may start the camera application to display the photographing interface. The photographing interface may include the viewfinder frame. It may be understood that the viewfinder frame may have different sizes in a shooting mode and in a recording mode. For example, the viewfinder frame may be a viewfinder frame in the shooting mode. The viewfinder frame in the recording mode may be an entire display. The preview image may be displayed in real time in the viewfinder frame in the preview state after the user turns on the camera and before the user presses a shooting/recording button.

Step 820: Display an output image on the display in response to the operation, where the output image is obtained based on a raw (raw) image obtained through joint demosaicing and denoising, the raw image obtained through joint demosaicing and denoising is a raw image obtained by performing image restoration processing on a to-be-processed raw image captured by the camera, a restored first channel image is used in an image restoration processing procedure of the to-be-processed raw image, the to-be-processed raw image includes at least two first channel images, and the restored first channel image is a channel image obtained by performing image restoration processing on the first channel image.

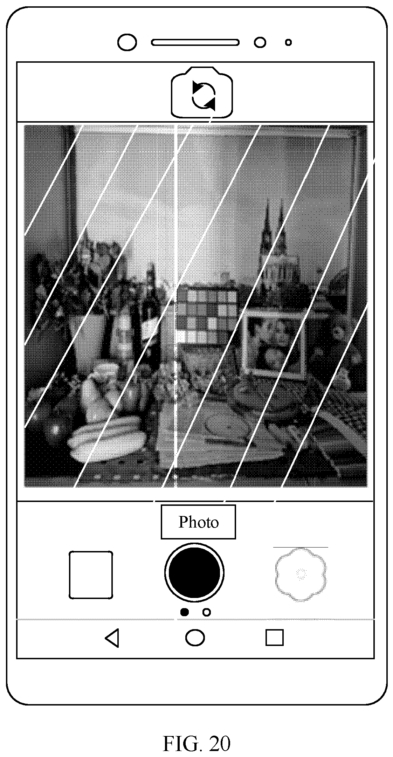

For example, the output image may be a standard full-color image obtained by performing subsequent image processing on the raw image obtained through joint demosaicing and denoising. Subsequent image processing may include, but not limited to, performing image processing such as white balance, color correction, and hue mapping on the raw image obtained through joint demosaicing and denoising. For example, for details, refer to FIG. 20.

It should be noted that the performing image restoration processing on the first channel image may be pre-restoring the first channel image. The first channel image may be a channel image that has most image information in a multi-channel image and that corresponds to the to-be-processed raw image. The image information may be high-frequency information in the image, for example, detail information, texture information, and edge information in the image. For example, for a specific procedure of pre-restoring the first channel image, refer to FIG. 13. Details are not described herein again.

For example, a channel image corresponding to the to-be-processed raw image may be an RGGB four-channel image, a BGGR four-channel image, or an RYYB four-channel image.

For example, when the channel image corresponding to the to-be-processed raw image is an RGGB four-channel image or a BGGR four-channel image, the first channel image may represent a green G channel image.

For example, when the channel image corresponding to the to-be-processed raw image is an RYYB four-channel image, the first channel image may represent a yellow Y channel image.

It should be understood that, based on the restored first channel image, that is, the pre-restored channel image, the neural network may have more image information when performing convolution processing. In this way, the neural network can avoid color texture to a maximum extent when restoring the to-be-processed raw image.

Further, a density map may be further input into the neural network, so that the neural network can distinguish between different texture regions, that is, a texture rich region and a texture sparse region, of the to-be-processed raw image when performing image restoration processing on the to-be-processed raw image.

Optionally, the image restoration processing procedure further includes: obtaining a density map of the to-be-processed raw image, where the density map indicates texture regions with different frequencies in the to-be-processed raw image; performing convolution processing on the density map and the to-be-processed raw image to obtain a first feature map; and guiding, based on the restored first channel image, the first feature map to undergo convolution processing, to obtain the raw image obtained through joint demosaicing and denoising.

It should be noted that the first feature map may be a feature map obtained by preliminarily restoring the to-be-processed raw image, that is, some noise and false artifacts may still appear in the first feature map, and no completely clean raw image obtained through joint demosaicing and denoising is obtained.

In an example, preliminary image restoration may be first performed on the to-be-processed raw image, that is, a convolution operation is performed on the to-be-processed raw image, to obtain an output feature map. The feature map is not a completely clean image, and some noise, false artifacts, or the like may appear. Further, adaptive convolution processing may be performed on the output feature map based on the restored first channel image, so that noise and mosaic in the feature map can be completely removed to obtain the final raw image obtained through joint demosaicing and denoising. Compared with a conventional convolution operation in which windows in different spatial locations share a parameter, adaptive convolution may consider correlation between spatial layout of different samples in the first channel image. In addition, because image information in different regions of the to-be-processed raw image is different, different convolution windows may be used for the different regions of the image, that is, parameters in the convolution windows in the different regions of the image may be different. In this way, the raw image obtained through joint demosaicing and denoising can be guided in aspects such as the spatial pixel layout and image texture information. For a specific processing procedure of adaptive convolution processing, refer to FIG. 15. Details are not described herein again.

Optionally, the guiding, based on the restored first channel image, the first feature map to undergo convolution processing, to obtain the raw image obtained through joint demosaicing and denoising includes: performing convolution processing on the first feature map based on spatial pixel layout of the restored first channel image, to obtain the raw image obtained through joint demosaicing and denoising. The spatial pixel layout indicates correlation between layout of different samples in the restored first channel image.

It should be understood that, compared with the conventional convolution operation in which the windows in the different spatial locations share the parameter, adaptive convolution may consider the correlation between the spatial layout of the different samples in the first channel image. In addition, because the image information in the different regions of the to-be-processed raw image is different, the different convolution windows may be used for the different regions of the image, that is, the parameters in the convolution windows in the different regions of the image may be different. In this way, the raw image obtained through joint demosaicing and denoising can be guided in the aspects such as the spatial pixel layout and image texture information.

It should be further understood that the preliminarily restored feature map may be guided based on the spatial pixel layout of the foregoing channel image pre-restored, so that further convolution processing is performed on the preliminarily restored feature map, that is, the preliminarily restored feature map can, to some extent, satisfy same or similar spatial pixel layout of the channel image pre-restored. The spatial pixel layout may be used to indicate correlation between layout of different samples.

For example, adaptive convolution processing may be performed according to the following formula:

$$o_i = \sum_{j \in \Omega(i)} G(f_i, f_j) W_{P_{i,j}} v_j + b \, ,$$

where

$o_i$ represents a feature map in a location i in a feature map corresponding to the raw image obtained through joint demosaicing and denoising; $\Omega$ represents the convolution window; W represents a convolution weight parameter; $P_{i,j}$ represents an index of the weight W; b represents a convolution bias; $f_i$ represents a vector in the location i in a feature map corresponding to the restored channel image; $f_j$ represents a vector in a location j in the feature map corresponding to the restored channel image, where the location j is correlated to the location i, that is, the location j may be any location in the convolution window corresponding to the location i; and G represents a Gaussian function that may be used to compute a Gaussian distance between two vectors.

Optionally, the performing convolution processing on the density map and the to-be-processed raw image to obtain a first feature map includes: obtaining a random noise map; and performing convolution processing on the density map, the random noise map, and the to-be-processed raw image to obtain the first feature map.

It should be understood that the image processing methods shown in FIG. 8 to FIG. 15 are also applicable to the image processing method shown in FIG. 16. In other words, extension, limitation, explanation, and description of related content in FIG. 8 to FIG. 15 are also applicable to same content in FIG. 16. Details are not described herein again.

According to the image processing method provided in this embodiment of this application, the channel image corresponding to the to-be-processed raw image may be obtained, where the channel image may include the at least two first channel images; image restoration processing is performed in advance on the first channel image to obtain the restored first channel image; and the to-be-processed raw image may be guided based on the restored first channel image to undergo image restoration processing, so as to obtain the raw image obtained through joint demosaicing and denoising processing. According to the image processing method in this embodiment of this application, the channel image corresponding to the to-be-processed raw image may be pre-restored, to obtain the restored channel image, that is, the preliminarily restored channel image, and the to-be-processed raw image may be guided based on the preliminarily restored channel image to undergo image restoration processing, so as to avoid color texture. In this way, image details can be retained in the processed image, and image quality is improved.

In addition, according to the image processing method in this embodiment of this application, the density map of the to-be-processed raw image may be further input, so that the neural network can be guided to distinguish the texture rich region from the texture sparse region during convolution processing, and regions with different texture density degrees are restored.

Table 1 shows test results of performing joint demosaicing and denoising on different models in different datasets according to this embodiment of this application.

Gaussian noise with a standard deviation of 10 is selected as noise during a test, and a test result is described based on a peak signal-to-noise ratio (Peak signal to noise ratio, PSNR), a learned perceptual image patch similarity (Learned perceptual image patch similarity, LPIPS), and a structural similarity index (Structural similarity index, SSIM). Test algorithms include the image processing method provided in this embodiment of this application, a flexible image signal processing algorithm (Flexible image signal processing, FlexISP), a sequential energy minimization algorithm (Sequential energy minimization, SEM), an alternating direction method of multipliers (Alternating direction method of multipliers, ADMM), a deep joint demosaicking and denoising algorithm (Deep joint demosaicking and denoising, DeepJoint), and a Kokkinos algorithm. According to test performance indexes shown in Table 1, it can be learned that the image processing method provided in this embodiment of this application, that is, the joint demosaicing and denoising method, achieves good effect in two test datasets.

**Table 1**

| | Demosaicing dataset (Pixelshift200) | | Synthetic dataset (MIT Moire) | |
|---|---|---|---|---|
| | PNSR | LPIPS | PSNR | SSIM |
| FlexISP | 32.66 | - | 26.61 | 0.7491 |
| SEM | 31.26 | - | 25.45 | 0.7531 |
| ADMM | 37.64 | - | 28.26 | 0.7720 |
| Deepjoint | 43.26 | 0.04017 | 29.75 | 0.8561 |
| Kokkinos | 41.95 | 0.05499 | 30.01 | 0.8123 |
| This application | 44.23 | 0.03280 | 30.09 | 0.9035 |

It should be noted that the foregoing example description is merely intended to help a person skilled in the art understand embodiments of this application, instead of limiting embodiments of this application to the illustrated specific value or specific scenario. A person skilled in the art definitely can make various equivalent modifications or changes based on the examples described above, and these modifications or changes also fall within the scope of embodiments of this application.

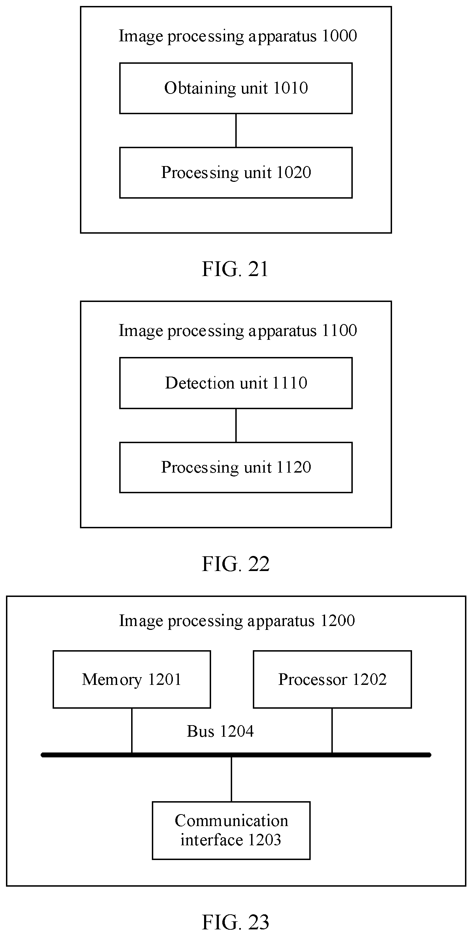

The foregoing describes in detail the image classification method according to embodiments of this application with reference to FIG. 1 to FIG. 20. The following describes in detail apparatus embodiments of this application with reference to FIG. 21 and FIG. 23. It should be understood that an image processing apparatus in embodiments of this application may perform various image processing methods in the foregoing embodiments of this application. To be specific, for specific working processes of the following various products, refer to corresponding processes in the foregoing method embodiments.

FIG. 21 is a schematic block diagram of an image processing apparatus 1000 according to an embodiment of this application. It should be understood that the image processing apparatus 1000 may perform the image processing method shown in FIG. 10. The image processing apparatus 1000 includes an obtaining unit 1010 and a processing unit 1020.

The obtaining unit 1010 is configured to obtain a channel image corresponding to a to-be-processed raw (raw) image, where the channel image includes at least two first channel images. The processing unit 1020 is configured to: perform image restoration processing on the first channel image to obtain the restored first channel image; and perform image restoration processing on the raw image based on the restored first channel image to obtain a raw image obtained through joint demosaicing and denoising processing.

Optionally, in an embodiment, the obtaining unit 1010 is further configured to:

obtain a density map of the to-be-processed raw image, where the density map indicates texture regions with different frequencies in the to-be-processed raw image.

The processing unit 1020 is specifically configured to:

perform convolution processing on the density map and the to-be-processed raw image to obtain a first feature map; and

guide, based on the restored first channel image, the first feature map to undergo convolution processing, to obtain the raw image obtained through joint demosaicing and denoising.

Optionally, in an embodiment, the processing unit 1020 is specifically configured to:

perform convolution processing on the first feature map based on spatial pixel layout of the restored first channel image, to obtain the raw image obtained through joint demosaicing and denoising, where the spatial pixel layout indicates correlation between layout of different samples in the restored first channel image.

Optionally, in an embodiment, the obtaining unit 1010 is further configured to:

obtain a random noise map.

The processing unit 1020 is specifically configured to:

perform convolution processing on the density map, the random noise map, and the to-be-processed raw image to obtain the first feature map.

Optionally, in an embodiment, the first channel image is a green G channel image.

Optionally, in an embodiment, the first channel image is a yellow Y channel image.

FIG. 22 is a schematic block diagram of an image processing apparatus according to an embodiment of this application. It should be understood that the image processing apparatus 1100 may perform the image processing method shown in FIG. 16. The image processing apparatus 1100 includes a detection unit 1110 and a processing unit 1120.

The detection unit 1110 is configured to detect an operation performed by a user to instruct a camera. The processing unit 1120 is configured to display an output image on a display in response to the operation. The output image is obtained based on a raw image obtained through joint demosaicing and denoising, the raw image obtained through joint demosaicing and denoising is a raw image obtained by performing image restoration processing on a to-be-processed raw image captured by a camera, a restored first channel image is used in an image restoration processing procedure of the to-be-processed raw image, the to-be-processed raw image includes at least two first channel images, and the restored first channel image is a channel image obtained by performing image restoration processing on the first channel image.

For example, the image processing apparatus 1100 may be an electronic device having the display and the camera.

Optionally, in an embodiment, the detection unit 1110 is specifically configured to:

detect an operation performed by the user to instruct to start a first processing mode, where the first processing mode indicates to perform image restoration processing on the to-be-processed raw image; or
detect an operation performed by the user to instruct to perform photographing.

Optionally, in an embodiment, the image processing apparatus further includes an obtaining unit. The obtaining unit is configured to:
obtain a density map of the to-be-processed raw image, where the density map indicates texture regions with different frequencies in the to-be-processed raw image.

The processing unit 1120 is specifically configured to:

perform convolution processing on the density map and the to-be-processed raw image to obtain a first feature map; and
guide, based on the restored first channel image, the first feature map to undergo convolution processing, to obtain the raw image obtained through joint demosaicing and denoising.

Optionally, in an embodiment, the processing unit 1120 is specifically configured to:
perform convolution processing on the first feature map based on spatial pixel layout of the restored first channel image, to obtain the raw image obtained through joint demosaicing and denoising, where the spatial pixel layout indicates correlation between layout of different samples in the restored first channel image.

Optionally, in an embodiment, the obtaining unit is further configured to:
obtain a random noise map.

The processing unit 1120 is specifically configured to:
perform convolution processing on the density map, the random noise map, and the to-be-processed raw image to obtain the first feature map.

Optionally, in an embodiment, the first channel image is a green G channel image.

Optionally, in an embodiment, the first channel image is a yellow Y channel image.

It should be noted that the image processing apparatus 1000 and the image processing apparatus 1100 are embodied in a form of functional units. The term "unit" herein may be implemented in a form of software and/or hardware. This is not specifically limited.

For example, the "unit" may be a software program, a hardware circuit, or a combination thereof for implementing the foregoing function. The hardware circuit may include an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

Therefore, the units in the examples described in this embodiment of this application can be implemented by using electronic hardware, or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

FIG. 23 is a schematic diagram of a hardware structure of an image processing apparatus according to an embodiment of this application. The image processing apparatus 1200 (the apparatus 1200 may be specifically a computer device) shown in FIG. 23 includes a memory 1201, a processor 1202, a communication interface 1203, and a bus 1204. A communication connection between the memory 1201, the processor 1202, and the communication interface 1203 is implemented through the bus 1204.

The memory 1201 may be a read-only memory (read-only memory, ROM), a static storage device, a dynamic storage device, or a random access memory (random access memory, RAM). The memory 1201 may store a program. When the program stored in the memory 1201 is executed by the processor 1202, the processor 1202 is configured to perform the steps of the image processing methods in embodiments of this application, for example, perform the steps shown in FIG. 10 to FIG. 20.

It should be understood that the image processing apparatus shown in this embodiment of this application may be a server, for example, a cloud server or a chip configured in a cloud server. Alternatively, the image processing apparatus shown in this embodiment of this application may be an intelligent terminal, or may be a chip disposed in an intelligent terminal.

The image processing methods disclosed in the foregoing embodiments of this application may be applied to the processor 1202, or may be implemented by the processor 1202. The processor 1202 may be an integrated circuit chip and has a signal processing capability. In an implementation process, the steps in the foregoing image processing methods may be implemented by using a hardware integrated logical circuit in the processor 1202, or by using instructions in a form of software. For example, the processor 1202 may be a chip including the NPU shown in FIG. 7.

The processor 1202 may be a central processing unit (central processing unit, CPU), a graphics processing unit (graphics processing unit, GPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor 1202 may implement or perform the methods, steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by means of a hardware decoding processor, or may be executed and accomplished by using a combination of hardware and software modules in the decoding processor. The software module may be located in a mature storage medium in the art, such as a random access memory (random access memory, RAM), a flash memory, a read-only memory (read-only memory, ROM), a programmable read-only memory, an electrically erasable programmable memory, or a register. The storage medium is located in the memory 1201. The processor 1202 reads instructions in the memory 1201, and performs, in combination with hardware of the processor 1202, functions that need to be performed by the units included in the image processing apparatus shown in FIG. 21 or FIG. 22 in embodiments of this application, or the steps of the image processing methods shown in FIG. 10 to FIG. 20 in the method embodiments of this application.

The communication interface 1203 uses a transceiver apparatus, for example, but not limited to, a transceiver, to implement communication between the apparatus 1200 and another device or another communication network.

The bus 1204 may include a path for transmitting information between components (for example, the memory 1201, the processor 1202, and the communication interface 1203) of the image processing apparatus 1200.

It should be noted that although only the memory, the processor, and the communication interface are shown in the foregoing image processing apparatus 1200, in a specific implementation process, a person skilled in the art should understand that the image processing apparatus 1200 may further include another component required for implementing normal running. In addition, a person skilled in the art should understand that, according to a specific requirement, the image processing apparatus 1200 may further include a hardware device for implementing another additional function. In addition, a person skilled in the art should understand that the image processing apparatus 1200 may include only components necessary for implementing this embodiment of this application, and does not need to include all the components shown in FIG. 23.

An embodiment of this application further provides a chip. The chip includes a transceiver unit and a processing unit. The transceiver unit may be an input/output circuit or a communication interface. The processing unit is a processor, a microprocessor, or an integrated circuit integrated on the chip. The chip may perform the image processing method in the foregoing method embodiments.

An embodiment of this application further provides a computer-readable storage medium. The computer-readable storage medium stores instructions. When the instructions are executed, the image processing method in the foregoing method embodiments is performed.

An embodiment of this application further provides a computer program product including instructions. When the instructions are executed, the image processing method in the foregoing method embodiments is performed.

It should also be understood that in embodiments of this application, the memory may include a read-only memory and a random access memory, and provide instructions and data to the processor. A part of the processor may further include a non-volatile random access memory. For example, the processor may further store information of a device type.

It should also be understood that in embodiments of this application, the memory may include a read-only memory and a random access memory, and provide instructions and data to the processor. A part of the processor may further include a non-volatile random access memory. For example, the processor may further store information of a device type.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that, the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one location, or may be distributed on a plurality of network units. A part or all of the units may be selected based on actual requirements to achieve the objectives of the solutions of embodiments.

In addition, functional modules in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or a part of the technical solutions may be implemented in a form of a software product. The computer software product is stored in a storage medium, and includes several instructions for instructing a computer device (which may be a personal computer, a server, a network device, or the like) to perform all or a part of the steps in the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application, which is defined by the appended claims.

**Claims**

1. A computer-implemented image processing method (600), comprising:

   obtaining (610) a multi-channel image corresponding to a to-be-processed raw image, wherein the multi-channel image comprises at least two first channel images;
   performing (620) image restoration processing on one of the at least two first channel images to obtain a restored first channel image; and
   performing (630) image restoration processing on the to-be-processed raw image based on the restored first channel image to obtain a raw image obtained through joint demosaicing and denoising processing.

2. The image processing method according to claim 1, further comprising:

   obtaining a density map of the to-be-processed raw image, wherein the density map indicates texture regions with different frequencies in the to-be-processed raw image; and
   the performing image restoration processing on the to-be-processed raw image based on the restored first channel image to obtain a raw image obtained through joint demosaicing and denoising processing comprises:

performing convolution processing on the density map and the to-be-processed raw image to obtain a first feature map; and

guiding, based on the restored first channel image, the first feature map to undergo convolution processing, to obtain the raw image obtained through joint demosaicing and denoising.

3. The image processing method according to claim 2, wherein the guiding, based on the restored first channel image, the first feature map to undergo convolution processing, to obtain the raw image obtained through joint demosaicing and denoising comprises:

performing convolution processing on the first feature map based on spatial pixel layout of the restored first channel image, to obtain the raw image obtained through joint demosaicing and denoising, wherein the spatial pixel layout indicates correlation between layout of different samples in the restored first channel image.

4. The image processing method according to claim 2 or 3, further comprising:

obtaining a random noise map; and

the performing convolution processing on the density map and the to-be-processed raw image to obtain a first feature map comprises:

performing convolution processing on the density map, the random noise map, and the to-be-processed raw image to obtain the first feature map.

5. The image processing method according to any one of claims 1 to 4, wherein the first channel image is a green G channel image.

6. The image processing method according to any one of claims 1 to 4, wherein the first channel image is a yellow Y channel image.

7. An image processing method (800), wherein the image processing method is applied to an electronic device having a display and a camera, and comprises:

detecting (810) an operation performed by a user to instruct the camera; and

displaying (820) an output image on the display in response to the operation, wherein the output image is obtained by performing image restoration processing according to claim 1 on the to-be-processed raw image captured by the camera.

8. The image processing method according to claim 7, wherein the detecting an operation performed by a user to instruct the camera comprises:

detecting an operation performed by the user to instruct to start a first processing mode, wherein the first processing mode indicates to perform image restoration processing on the to-be-processed raw image; or

detecting an operation performed by the user to instruct to perform photographing.

9. The image processing method according to claim 7 or 8, wherein the image restoration processing procedure of the to-be-processed raw image further comprises:

obtaining a density map of the to-be-processed raw image, wherein the density map indicates texture regions with different frequencies in the to-be-processed raw image;

performing convolution processing on the density map and the to-be-processed raw image to obtain a first feature map; and

guiding, based on the restored first channel image, the first feature map to undergo convolution processing, to obtain the raw image obtained through joint demosaicing and denoising.

10. An image processing apparatus (1000), comprising:

an obtaining unit (1010), configured to obtain a multi-channel image corresponding to a to-be-processed raw image, wherein the multi-channel image comprises at least two first channel images; and

a processing unit (1020), configured to: perform image restoration processing on one of the at least two first channel images to obtain a restored first channel image; and perform image restoration processing on the to-be-processed raw image based on the restored first channel image to obtain a raw image obtained through joint demosaicing and denoising processing.

11. The image processing apparatus according to claim 10, wherein the obtaining unit is further configured to:

obtain a density map of the to-be-processed raw image, wherein the density map indicates texture regions with different frequencies in the to-be-processed raw image; and
the processing unit is specifically configured to:

perform convolution processing on the density map and the to-be-processed raw image to obtain a first feature map; and
guide, based on the restored first channel image, the first feature map to undergo convolution processing, to obtain the raw image obtained through joint demosaicing and denoising.

12. The image processing apparatus according to claim 11, wherein the processing unit is specifically configured to:
perform convolution processing on the first feature map based on spatial pixel layout of the restored first channel image, to obtain the raw image obtained through joint demosaicing and denoising, wherein the spatial pixel layout indicates correlation between layout of different samples in the restored first channel image.

13. The image processing apparatus according to claim 11 or 12, wherein the obtaining unit is further configured to:

obtain a random noise map; and
the processing unit is specifically configured to:
perform convolution processing on the density map, the random noise map, and the to-be-processed raw image to obtain the first feature map.

14. The image processing apparatus according to any one of claims 10 to 13, wherein the first channel image is a green G channel image.

15. The image processing apparatus according to any one of claims 10 to 13, wherein the first channel image is a yellow Y channel image.

**Patentansprüche**

1. Computerimplementiertes Bildverarbeitungsverfahren (600), das umfasst:

Erhalten (610) eines Mehrkanalbildes, das einem zu verarbeitenden Rohbild entspricht, wobei das Mehrkanalbild mindestens zwei Bilder des ersten Kanals umfasst;
Durchführen (620) einer Bildwiederherstellungsverarbeitung an einem der mindestens zwei Bilder des ersten Kanals, um ein wiederhergestelltes Bild des ersten Kanals zu erhalten; und
Durchführen (630) einer Bildwiederherstellungsverarbeitung an dem zu verarbeitenden Rohbild basierend auf dem wiederhergestellten Bild des ersten Kanals, um ein Rohbild, das durch gemeinsame Demosaicing- und Entrauschungsverarbeitung erhalten wird, zu erhalten.

2. Bildverarbeitungsverfahren nach Anspruch 1, das ferner umfasst:

Erhalten einer Dichtekarte des zu verarbeitenden Rohbildes, wobei die Dichtekarte Texturbereiche mit unterschiedlichen Frequenzen in dem zu verarbeitenden Rohbild anzeigt; und
das Durchführen einer Bildwiederherstellungsverarbeitung an dem zu verarbeitenden Rohbild basierend auf dem wiederhergestellten Bild des ersten Kanals, um ein Rohbild, das durch gemeinsame Demosaicing- und Entrauschungsverarbeitung erhalten wird, zu erhalten, umfasst:

Durchführen einer Faltungsverarbeitung an der Dichtekarte und des zu verarbeitenden Rohbildes, um eine erste Merkmalskarte zu erhalten; und
Führen, basierend auf dem wiederhergestellten Bild des ersten Kanals, der ersten Merkmalskarte, um sie einer Faltungsverarbeitung zu unterziehen, um das Rohbild, das durch gemeinsames Demosaicing und Entrauschen erhalten wird, zu erhalten.

3. Bildverarbeitungsverfahren nach Anspruch 2, wobei das Führen, basierend auf dem wiederhergestellten Bild des ersten Kanals, der ersten Merkmalskarte, um sie einer Faltungsverarbeitung zu unterziehen, um das Rohbild, das durch gemeinsames Demosaicing und Entrauschen erhalten wird, zu erhalten, umfasst:

Durchführen einer Faltungsverarbeitung an der ersten Merkmalskarte basierend auf dem räumlichen Pixel-Layout des wiederhergestellten Bildes des ersten Kanals, um das Rohbild, das durch gemeinsames Demosaicing und Entrauschen erhalten wird, zu erhalten, wobei das räumliche Pixel-Layout die Korrelation zwischen dem Layout unterschiedlicher Proben in dem wiederhergestellten Bild des ersten Kanals anzeigt.

4. Bildverarbeitungsverfahren nach Anspruch 2 oder 3, das ferner umfasst:

Erhalten einer Zufallsrauschkarte; und
das Durchführen einer Faltungsverarbeitung an der Dichtekarte und des zu verarbeitenden Rohbildes, um eine erste Merkmalskarte zu erhalten, umfasst:
Durchführen einer Faltungsverarbeitung an der Dichtekarte, der Zufallsrauschkarte und des zu verarbeitenden Rohbildes, um die erste Merkmalskarte zu erhalten.

5. Bildverarbeitungsverfahren nach einem der Ansprüche 1 bis 4, wobei das Bild des ersten Kanals ein grünes G-Kanalbild ist.

6. Bildverarbeitungsverfahren nach einem der Ansprüche 1 bis 4, wobei das Bild des ersten Kanals ein gelbes Y-Kanalbild ist.

7. Bildverarbeitungsverfahren (800), wobei das Bildverarbeitungsverfahren auf eine elektronische Vorrichtung, die eine Anzeige und eine Kamera aufweist, angewendet wird und umfasst:

Erkennen (810) einer durch einen Benutzer durchgeführten Operation, um die Kamera anzuweisen; und
Anzeigen (820) eines Ausgabebildes auf der Anzeige als Reaktion auf die Operation, wobei das Ausgabebild durch das Durchführen einer Bildwiederherstellungsverarbeitung nach Anspruch 1 an dem zu verarbeitenden, durch die Kamera aufgenommenen Rohbild erhalten wird.

8. Bildverarbeitungsverfahren nach Anspruch 7, wobei das Erkennen einer durch einen Benutzer durchgeführten Operation, um die Kamera anzuweisen, umfasst:

Erkennen einer durch den Benutzer durchgeführten Operation, um einen Start eines ersten Verarbeitungsmodus anzuweisen, wobei der erste Verarbeitungsmodus angibt, eine Bildwiederherstellungsverarbeitung an dem zu verarbeitenden Rohbild durchzuführen; oder
Erkennen einer durch den Benutzer durchgeführten Operation, um anzuweisen, ein Fotografieren durchzuführen.

9. Bildverarbeitungsverfahren nach Anspruch 7 oder 8, wobei die Bildwiederherstellungsverarbeitungsprozedur des zu verarbeitenden Rohbildes ferner umfasst:

Erhalten einer Dichtekarte des zu verarbeitenden Rohbildes, wobei die Dichtekarte Texturbereiche mit unterschiedlichen Frequenzen in dem zu verarbeitenden Rohbild anzeigt;
Durchführen einer Faltungsverarbeitung an der Dichtekarte und des zu verarbeitenden Rohbildes, um eine erste Merkmalskarte zu erhalten; und
Führen, basierend auf dem wiederhergestellten Bild des ersten Kanals, der ersten Merkmalskarte, um sie einer Faltungsverarbeitung zu unterziehen, um das Rohbild, das durch gemeinsames Demosaicing und Entrauschen erhalten wird, zu erhalten.

10. Bildverarbeitungseinrichtung (1000), die umfasst:

eine Erhaltungseinheit (1010), die konfiguriert ist, um ein Mehrkanalbild, das einem zu verarbeitenden Rohbild entspricht, zu erhalten, wobei das Mehrkanalbild mindestens zwei Bilder des ersten Kanals umfasst; und
eine Verarbeitungseinheit (1020), die konfiguriert ist zum: Durchführen einer Bildwiederherstellungsverarbeitung an einem der mindestens zwei Bilder des ersten Kanals, um ein wiederhergestelltes Bild des ersten Kanals zu erhalten; und
Durchführen einer Bildwiederherstellungsverarbeitung an dem zu verarbeitenden Rohbild basierend auf dem wiederhergestellten Bild des ersten Kanals, um ein Rohbild, das durch gemeinsame Demosaicing- und Entrauschungsverarbeitung erhalten wird, zu erhalten.

**11.** Bildverarbeitungseinrichtung nach Anspruch 10, wobei die Erhaltungseinheit ferner konfiguriert ist zum:

Erhalten einer Dichtekarte des zu verarbeitenden Rohbildes, wobei die Dichtekarte Texturbereiche mit unterschiedlichen Frequenzen in dem zu verarbeitenden Rohbild anzeigt; und
die Verarbeitungseinheit speziell konfiguriert ist zum:

Durchführen einer Faltungsverarbeitung an der Dichtekarte und des zu verarbeitenden Rohbildes, um eine erste Merkmalskarte zu erhalten; und
Führen, basierend auf dem wiederhergestellten Bild des ersten Kanals, der ersten Merkmalskarte, um sie einer Faltungsverarbeitung zu unterziehen, um das Rohbild, das durch gemeinsames Demosaicing und Entrauschen erhalten wird, zu erhalten.

**12.** Bildverarbeitungseinrichtung nach Anspruch 11, wobei die Verarbeitungseinheit speziell konfiguriert ist zum:
Durchführen einer Faltungsverarbeitung an der ersten Merkmalskarte basierend auf dem räumlichen Pixel-Layout des wiederhergestellten Bildes des ersten Kanals, um das Rohbild, das durch gemeinsames Demosaicing und Entrauschen erhalten wird, zu erhalten, wobei das räumliche Pixel-Layout die Korrelation zwischen dem Layout unterschiedlicher Proben in dem wiederhergestellten Bild des ersten Kanals anzeigt.

**13.** Bildverarbeitungseinrichtung nach Anspruch 11 oder 12, wobei die Erhaltungseinheit ferner konfiguriert ist zum:

Erhalten einer Zufallsrauschkarte; und
die Verarbeitungseinheit speziell konfiguriert ist zum:
Durchführen einer Faltungsverarbeitung an der Dichtekarte, der Zufallsrauschkarte und des zu verarbeitenden Rohbildes, um die erste Merkmalskarte zu erhalten.

**14.** Bildverarbeitungseinrichtung nach einem der Ansprüche 10 bis 13, wobei das Bild des ersten Kanals ein grünes G-Kanalbild ist.

**15.** Bildverarbeitungseinrichtung nach einem der Ansprüche 10 bis 13, wobei das Bild des ersten Kanals ein gelbes Y-Kanalbild ist.

**Revendications**

**1.** Procédé de traitement d'image mis en œuvre par ordinateur (600), comprenant :

l'obtention (610) d'une image multicanal correspondant à une image brute à traiter, dans lequel l'image multicanal comprend au moins deux images de premier canal ;
la réalisation (620) d'un traitement de restauration d'image sur l'une des au moins deux images de premier canal afin d'obtenir une image de premier canal restaurée ; et
la réalisation (630) d'un traitement de restauration d'image sur l'image brute à traiter sur la base de l'image de premier canal restaurée pour obtenir une image brute obtenue par le biais d'un traitement conjoint de démosaïquage et de débruitage.

**2.** Procédé de traitement d'image selon la revendication 1, comprenant en outre :

l'obtention d'une carte de densité de l'image brute à traiter, dans lequel la carte de densité indique des régions de texture ayant des fréquences différentes dans l'image brute à traiter ; et
la réalisation d'un traitement de restauration d'image sur l'image brute à traiter sur la base de l'image de premier canal restaurée pour obtenir une image brute obtenue par le biais d'un traitement conjoint de démosaïquage et de débruitage comprend :

la réalisation d'un traitement de convolution sur la carte de densité et l'image brute à traiter pour obtenir une première carte de caractéristiques ; et
le guidage, sur la base de l'image de premier canal restaurée, de la première carte de caractéristiques pour qu'elle subisse un traitement de convolution, afin d'obtenir l'image brute obtenue par le biais d'un démosaïquage et d'un débruitage conjoints.

3. Procédé de traitement d'image selon la revendication 2, dans lequel le guidage, sur la base de l'image de premier canal restaurée, de la première carte de caractéristiques pour qu'elle subisse un traitement de convolution, afin d'obtenir l'image brute obtenue par le biais d'une démosaïquage et d'un débruitage conjoints comprend :
la réalisation d'un traitement de convolution sur la première carte de caractéristiques sur la base d'une disposition spatiale de pixels de l'image de premier canal restaurée, afin d'obtenir l'image brute obtenue par le biais d'un démosaïquage et d'un débruitage conjoints, dans lequel la disposition spatiale de pixels indique une corrélation entre une disposition de différents échantillons dans l'image de premier canal restaurée.

4. Procédé de traitement d'image selon la revendication 2 ou 3, comprenant en outre :

   l'obtention d'une carte de bruit aléatoire ; et
   la réalisation d'un traitement de convolution sur la carte de densité et l'image brute à traiter pour obtenir une première carte de caractéristiques comprend :
   la réalisation d'un traitement de convolution sur la carte de densité, la carte de bruit aléatoire et l'image brute à traiter pour obtenir la première carte de caractéristiques.

5. Procédé de traitement d'image selon l'une quelconque des revendications 1 à 4, dans lequel l'image de premier canal est une image de canal vert V.

6. Procédé de traitement d'image selon l'une quelconque des revendications 1 à 4, dans lequel l'image de premier canal est une image de canal jaune J.

7. Procédé de traitement d'image (800), dans lequel le procédé de traitement d'image est appliqué à un dispositif électronique doté d'une unité d'affichage et d'une caméra, et comprend :

   la détection (810) d'une opération réalisée par un utilisateur pour donner des instructions à la caméra ; et
   l'affichage (820) d'une image de sortie sur l'unité d'affichage en réponse à l'opération, dans lequel l'image de sortie est obtenue en réalisant un traitement de restauration d'image selon la revendication 1 sur l'image brute à traiter capturée par la caméra.

8. Procédé de traitement d'image selon la revendication 7, dans lequel la détection d'une opération réalisée par un utilisateur pour donner des instructions à la caméra comprend :

   la détection d'une opération réalisée par l'utilisateur pour donner l'instruction de lancer un premier mode de traitement, dans lequel le premier mode de traitement indique de réaliser un traitement de restauration d'image sur l'image brute à traiter ; ou
   la détection d'une opération réalisée par l'utilisateur pour donner l'instruction de réaliser une prise de vues.

9. Procédé de traitement d'image selon la revendication 7 ou 8, dans lequel la procédure de traitement de restauration d'image de l'image brute à traiter comprend en outre :

   l'obtention d'une carte de densité de l'image brute à traiter, dans lequel la carte de densité indique des régions de texture ayant des fréquences différentes dans l'image brute à traiter ;
   la réalisation d'un traitement de convolution sur la carte de densité et l'image brute à traiter pour obtenir une première carte de caractéristiques ; et
   le guidage, sur la base de l'image de premier canal restaurée, de la première carte de caractéristiques pour qu'elle subisse un traitement de convolution, afin d'obtenir l'image brute obtenue par le biais d'un démosaïquage et d'un débruitage conjoints.

10. Appareil de traitement d'image (1000), comprenant :

    une unité d'obtention (1010), configurée pour obtenir une image multicanal correspondant à une image brute à traiter, dans lequel l'image multicanal comprend au moins deux images de premier canal ; et
    une unité de traitement (1020), configurée pour : réaliser un traitement de restauration d'image sur l'une des au moins deux images de premier canal afin d'obtenir une image de premier canal restaurée ; et réaliser un traitement de restauration d'image sur l'image brute à traiter sur la base de l'image de premier canal restaurée afin d'obtenir une image brute obtenue par le biais d'un traitement conjoint de démosaïquage et de débruitage.

11. Appareil de traitement d'image selon la revendication 10, dans lequel l'unité d'obtention est en outre configurée pour :

obtenir une carte de densité de l'image brute à traiter, dans lequel la carte de densité indique des régions de texture ayant des fréquences différentes dans l'image brute à traiter ; et
l'unité de traitement est particulièrement configurée pour :

réaliser un traitement de convolution sur la carte de densité et l'image brute à traiter pour obtenir une première carte de caractéristiques ; et
guider, sur la base de l'image de premier canal restaurée, la première carte de caractéristiques pour qu'elle subisse un traitement de convolution, afin d'obtenir l'image brute obtenue par le biais d'un démosaïquage et d'un débruitage conjoints.

12. Appareil de traitement d'image selon la revendication 11, dans lequel l'unité de traitement est particulièrement configurée pour :
réaliser un traitement de convolution sur la première carte de caractéristiques sur la base d'une disposition spatiale de pixels de l'image de premier canal restaurée, afin d'obtenir l'image brute obtenue par le biais d'un démosaïquage et d'un débruitage conjoints, dans lequel la disposition spatiale de pixels indique une corrélation entre une disposition de différents échantillons dans l'image de premier canal restaurée.

13. Appareil de traitement d'image selon la revendication 11 ou 12, dans lequel l'unité d'obtention est en outre configurée pour :

obtenir une carte de bruit aléatoire ; et
l'unité de traitement est particulièrement configurée pour :
réaliser un traitement de convolution sur la carte de densité, la carte de bruit aléatoire et l'image brute à traiter pour obtenir la première carte de caractéristiques.

14. Appareil de traitement d'image selon l'une quelconque des revendications 10 à 13, dans lequel l'image de premier canal est une image de canal vert V.

15. Appareil de traitement d'image selon l'une quelconque des revendications 10 à 13, dans lequel l'image de premier canal est une image de canal jaune J.

| To-be-processed image | Intelligent terminal | Processed output image |

FIG. 1

To-be-processed image → Image processing → Output image

FIG. 2

Another
vehicle 1

Another
vehicle 2

Autonomous vehicle

FIG. 3

| Obtain a to-be-processed streetscape image | → | Image processing | → | Output a streetscape image |
|---|---|---|---|---|

FIG. 4

FIG. 5

System architecture 100

Data collection device 160

Data stream

Database 130

Data stream

Training device 120

Execution device 110

Target model/rule 201

Input data

Client device 140

I/O interface 112

Computation module 111

Data storage system 150

Output result

Preprocessing module 113

Preprocessing module 114

EP 4 109 392 B1

Image processing result

Output layer 240

Fully
connected
layer
230

Hidden layer n (23n)

Hidden layer 2 (232)

Hidden layer 1 (231)

Convolutional
layer/Pooling
layer
320

226

225

224

223

222

221

Convolutional
neural network
(CNN)
200

Input layer 210

To-be-processed image

FIG. 6

FIG. 7

Host CPU

External memory

Neural network processing unit 300

Weight memory 302

Input memory 301

Operation circuit 303

Vector computation unit 307

Accumulator 308

Direct memory access controller 305

Unified memory 306

Controller 304

Instruction fetch buffer 309

Bus interface unit 310

400

Data storage
system 450

Execution device 410

...

Communication
network

Local device
420

Local device
430

Examples are
as follows:

FIG. 8

Joint denoising and demosaicing system 500

Pre-training feature repository 550

Channel restoration module 520

A sensor obtains an image

Main restoration module 510

Guidance module 530

Output image

Density map construction module 540

FIG. 9

600

Obtain a channel image corresponding to a to-be-processed raw (raw) image, where the channel image includes at least two first channel images

610

Perform image restoration processing on the first channel image to obtain the restored first channel image

620

Perform image restoration processing on the to-be-processed raw (raw) image based on the restored first channel image to obtain a raw (raw) image obtained through joint demosaicing and denoising processing

630

FIG. 10

Obtain a to-be-processed raw image — S701

S702 — Restored channel image

First feature map — S703

Adaptive convolution processing — S704

Raw image obtained through joint demosaicing and denoising — S705

FIG. 11

Density map

Noise map

| R | G | R | G |
| G | B | G | B |
| R | G | R | G |
| G | B | G | B |

Input data

Resampling

w

h

Convolutional network

64

w

h

Feature map

FIG. 12

FIG. 13

Grayscale image              Residual image

$g_1$

$g_2$

$h$

Density map

Blurred grayscale image    Blurred residual image

FIG. 14

FIG. 15

800

Detect an operation performed by a user to instruct a camera

810

Display an output image on a display in response to the operation, where the output image is obtained based on a raw (raw) image obtained through joint demosaicing and denoising, the raw (raw) image obtained through joint demosaicing and denoising is a raw (raw) image obtained by performing image restoration on a to-be-processed raw (raw) image captured by the camera, a restored first channel image is used in an image restoration process of the to-be-processed raw (raw) image, the to-be-processed raw (raw) image includes at least two first channel images, and the restored first channel image is a channel image obtained by performing image restoration on the first channel image

820

FIG. 16

FIG. 17(a)

FIG. 17(b)

FIG. 18(a)

FIG. 18(b)

FIG. 19

FIG. 20

Image processing apparatus 1000

Obtaining unit 1010

Processing unit 1020

FIG. 21

Image processing apparatus 1100

Detection unit 1110

Processing unit 1120

FIG. 22

Image processing apparatus 1200

Memory 1201

Processor 1202

Bus 1204

Communication interface 1203

FIG. 23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MICHAEL GHARBI**. Deep Joint Demosaicking and Denoising. *ACM TRANSACTIONS ON GRAPHICS*, 11 November 2016, vol. 35 (6), 1-12